# EUROPEAN PATENT APPLICATION

(11) **EP 4 768 704 A1**
(43) Date of publication of application: **01.07.2026**
(21) Application number: 25226916.2
(22) Date of filing: 23.12.2025
(51) Int. Cl.: F02C 6/08, F02C 7/06, F02C 7/14, F02C 7/18, F02C 7/224

(54) **GAS TURBINE ENGINES INCLUDING THERMAL MANAGEMENT SYSTEMS WITH RECIRCULATING FUEL CIRCUITS AND RELATED METHODS**

(30) Priority: 31.12.2024 US 202419007232
(71) Applicant: General Electric Company, Cincinnati, Ohio 45215 (US)
(72) Inventor: HINDERLITER, Kevin Edward, Evendale, 45241 (US)
(74) Representative: Openshaw & Co.

(57) **Abstract**

Gas turbine engines (106) including thermal management systems (200, 300, 400, 500, 600, 700, 764, 800, 808, 900, 1000) with recirculating fuel circuits and related methods are disclosed herein. An example gas turbine engine disclosed herein includes a fuel flow line (202, 708), a fuel inlet (209, 712), a nozzle (212, 714) fluidly coupled to the fuel inlet (209, 712) by the fuel flow line (202, 708), and a recirculation flow circuit (204, 710) coupled to the fuel flow line (202, 708) between the fuel inlet (209, 712) and the nozzle (212, 714), the recirculation flow circuit (204, 710) including a cooler and a heat-producing component (216, 731A) coupled to the fuel flow line (202, 708) downstream of the fuel inlet (209, 712) along the fuel flow line (202, 708).

## Description

### FIELD OF THE DISCLOSURE

This disclosure relates generally to thermal management systems and, more particularly, to gas turbine engines including thermal management systems with recirculating fuel circuits and related methods.

### BACKGROUND

Aircraft include various accessory systems supporting the operation of the aircraft and/or its gas turbine engine(s). For example, such accessory systems may include a lubrication system that lubricates components of the engine(s), an engine cooling system that provides cooling air to engine components, an environmental control system that provides cooled air to the cabin of the aircraft, and/or the like. As such, heat is added or removed to/from these accessory systems via a fluid (e.g., oil, air, etc.) transmitted throughout a thermal management system.

### BRIEF DESCRIPTION OF THE DRAWINGS

A full and enabling disclosure of the preferred embodiments, including the best mode thereof, directed to one of ordinary skill in the art, is set forth in the specification, which makes reference to the appended Figures, in which:
FIG. 1 is a simplified illustration of an aircraft including a fuel distribution and thermal management system in which the teachings of this disclosure can be implemented.
FIG. 2 is a simplified schematic diagram of an example first fuel distribution and thermal management system that can implement the fuel distribution and thermal management system of FIG. 1.
FIG. 3 is a simplified schematic diagram of an example second fuel distribution and thermal management system that can implement the fuel distribution and thermal management system of FIG. 1.
FIG. 4 is a simplified schematic diagram of an example third fuel distribution and thermal management system that can implement the fuel distribution and thermal management system of FIG. 1.
FIG. 5 is a simplified schematic diagram of an example fourth fuel distribution and thermal management system that can implement the fuel distribution and thermal management system of FIG. 1.
FIG. 6 is a simplified schematic diagram of an example fifth fuel distribution and thermal management system that can implement the fuel distribution and thermal management system of FIG. 1.
FIG. 7A is a schematic diagram of an example sixth fuel distribution and thermal management system that can implement the fuel distribution and thermal management system of FIG. 1.
FIG. 7B is a schematic diagram of an example seventh fuel distribution and thermal management system that can implement the fuel distribution and thermal management system of FIG. 1.
FIG. 8A is a schematic diagram of an example eighth fuel distribution and thermal management system that can implement the fuel distribution and thermal management system of FIG. 1.
FIG. 8B is a schematic diagram of an example ninth fuel distribution and thermal management system that can implement the fuel distribution and thermal management system of FIG. 1.
FIG. 9 is a schematic diagram of an example tenth fuel distribution and thermal management system that can implement the fuel distribution and thermal management system of FIG. 1.
FIG. 10 is a schematic diagram of an example eleventh fuel distribution and thermal management system that can implement the fuel distribution and thermal management system of FIG. 1.
FIG. 11 is a block diagram of the fuel distribution controller circuitry of FIG. 1.
FIG. 12 is a flowchart representative of example machine readable instructions and/or example operations that may be executed, instantiated, and/or performed by example programmable circuitry to implement the fuel distribution controller circuitry of FIG. 11.
FIG. 13 is a block diagram of an example processing platform including programmable circuitry structured to execute, instantiate, and/or perform the example machine readable instructions and/or perform the example operations of FIG. 12 to implement the fuel distribution controller circuitry of FIG. 11.

In general, the same reference numbers will be used throughout the drawing(s) and accompanying written description to refer to the same or like parts. The figures are not necessarily to scale.

### DETAILED DESCRIPTION

Some prior gas turbine engines and aircraft use fuel as a heat sink to dissipate heat from hot lubricant flows and/or hot components, such as bearings. Over time, gas turbine engines have become more fuel efficient, which reduces the flow rate of fuel available as a heat sink in the thermal management systems of such gas turbine engines. Additionally, certain gas turbine engines include more electric components than prior gas turbine engines, which increases the waste heat generated by such gas turbine engines. The increased waste heat generation and reduced fuel consumption rate of next-generation gas turbine engines may render existing thermal management architectures inadequate. Examples disclosed herein include fuel distribution and thermal management systems that chill fuel within a recirculation loop domestic to the gas turbine engine. As used herein, the phase "domestic to gas turbine engine" indicates that a component and/or system is disposed within the nacelle, the undercowl, and/or other areas within the boundary of a gas turbine engine. Some example fuel distribution and thermal management systems disclosed herein include a refrigerant flow that cools the fuel in the recirculation loop. In some examples disclosed herein, the chilled fuel of the recirculation loop is used to cool high-temperature electronics associated with the gas turbine engine.

The terms "upstream" and "downstream" refer to the relative direction with respect to fluid flow in a fluid pathway. For example, "upstream" refers to the direction from which the fluid flows, and "downstream" refers to the direction in which the fluid flows. When the terms "upstream" and "downstream" are used in conjunction with a flow circuit, they refer to a flow fluid during a single circulation within the flow circuit. Various terms are used herein to describe the orientation of features. As used herein, the orientation of features, forces, and moments are described with reference to the yaw axis, pitch axis, and roll axis of the vehicle associated with the features, forces, and moments.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

Some gas turbine engines use the fuel flowing within gas turbine engines as a heat sink. Heating the fuel increases the efficiency of the combustion of the fuel and enables the cooling of engine components with an existing fluid flow. Some prior gas turbine engines use fuel to cool lubricant flows and/or the mechanical components of the gas turbine engine, such as actuators, bearings, and/or gearboxes. In recent years, the fuel efficiency of gas turbine engines has increased, which reduces the fuel flow available as a heat sink. Additionally, the electrification of gas turbine engines has increased, which increases the heat load of the components of the gas turbine engine. That is, electronic components, such as power distribution units, motor generators, and inverter controller converters have comparatively low operational temperatures and may benefit from active cooling. The increased heat load and reduced volume of heat sink fluid can lead to larger thermal management systems and/or can restrict the design of gas turbine engines to accommodate the cooling of such components.

Examples disclosed herein include thermal management systems, which chill fuel within a recirculation loop inside the gas turbine engine. Some example thermal management systems disclosed herein include a refrigerant flow that cools the fuel in the recirculation loop. In some examples disclosed herein, the chilled fuel of the recirculation loop is used to cool high-temperature electronics associated with the gas turbine engine. In some examples disclosed herein, the recirculation loop is domestic to the gas turbine engine. In some examples disclosed herein, the recirculation loop includes a dedicated fuel pump to drive fuel therethrough. Some examples disclosed herein include a vapor cycle system that chills the fuel of the fuel distribution system. In some such examples disclosed herein, the refrigerant of the vapor cycle system is used to cool the lubricant of a lubrication system of the thermal management systems. Some examples disclosed herein include air cycle systems that cool the fuel of the fuel distribution system. Examples fuel distribution and thermal management systems disclosed herein enhance the cooling provided per unit of fuel when compared to prior systems and are suitable for use with electrified gas turbine engines.

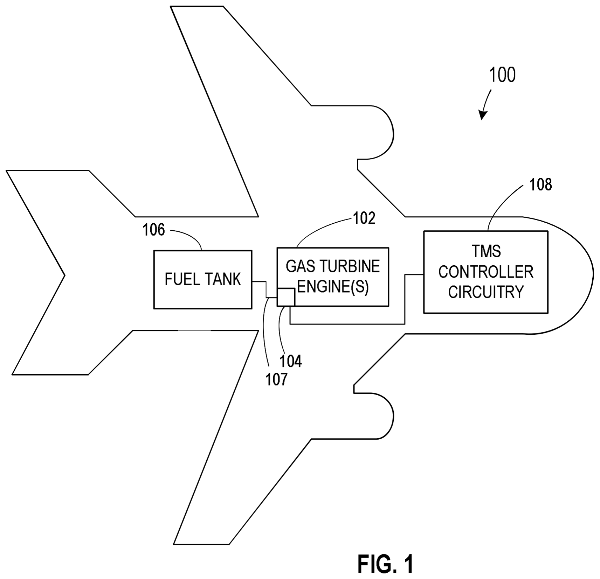

FIG. 1 is an example illustration of an aircraft 100 including a gas turbine engine 102 with an example fuel distribution and thermal management system 104 implemented in accordance with teachings of this disclosure. In the illustrated example of FIG. 1, the aircraft 100 includes a fuel tank 106, which provides fuel for a gas turbine engine 102 via an aircraft fuel distribution system 107. In the illustrated example of FIG. 1, the gas turbine engine 102 includes thermal management system controller circuitry (e.g., TMS controller circuitry 108).

In the illustrated example of FIG. 1, the aircraft 100 is a fixed-wing commercial plane. In other examples, the aircraft 100 can be another fixed-wing aircraft (e.g., an unmanned aerial vehicle (UAV), a military aircraft, etc.), a rotary-wing aircraft (e.g., a helicopter, etc.), an astronautical vehicle (e.g., a launch vehicle, a satellite, a crewed vessel, etc.). In the illustrated example of FIG. 1, the aircraft 100 includes a single gas turbine engine (e.g., the gas turbine engine 102, etc.), which propels and/or powers the aircraft 100. The gas turbine engine 102 can be implemented by any suitable type of gas turbine engine 102 including an open fan gas turbine engine, a turbofan, a turbojet, a turboprop, a turboshaft, and/or another type of turbo machinery. In some examples, the aircraft 100 can include multiple gas turbine engines, such as multiple gas turbine engines mounted beneath the wings of the aircraft 100.

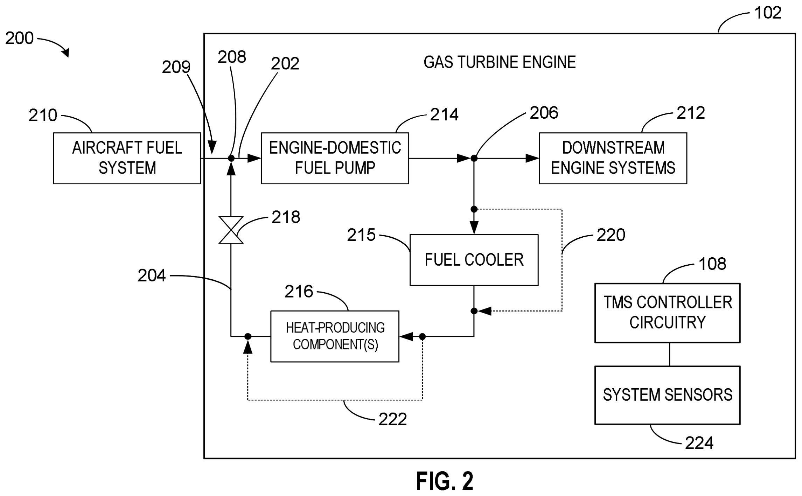

The aircraft fuel distribution system 107 transports fuel from the fuel tank 106 to the fuel distribution and thermal management system 104 of the gas turbine engine 102. The aircraft fuel distribution system 107 can include one or more pumps, fuel lines, other tanks, and/or other fuel transfer components. The fuel distribution and thermal management system 104 includes a fuel flow line that transports fuel to the combustor of the gas turbine engine 102. In some such examples, the fuel distribution and thermal management system 104 includes a recirculation loop in the gas turbine engine 102 (e.g., an engine domestic recirculation loop, etc.). In some examples, the recirculation loop includes a heat exchanger (e.g., a cooler, etc.) that reduces the temperature of the fuel within the recirculation loop. In some such examples, the fuel distribution and thermal management system 104 includes a refrigerant line that cools the fuel via a heat lifter in the recirculation loop. That is, the fuel distribution and thermal management system 104 moves heat from a comparatively cold component (e.g., a heat-sensitivity electronic of the gas turbine engine 102, etc.) to a comparatively hot location (e.g., a bypass flow of the gas turbine engine 102, a third stream of the gas turbine engine 102, etc.). In some examples, the fuel distribution and thermal management system 104 includes a vapor cycle system (VCS). Additionally or alternatively, the fuel distribution and thermal management system 104 includes an air cycle system (ACS). In some examples, the fuel distribution and thermal management system 104 includes a lubricant flow line that includes a lubricant that is cooled by the flow of fuel through the flow line. Example implementations of the fuel distribution and thermal management system 104 are described below in conjunction with FIGS. 2-10.

The fuel tank 106 is a vessel that contains fuel for combustion within the gas turbine engine 102. In some examples, the fuel tank 106 includes a hydrocarbon fuel such as jet propellant one (JP1). In other examples, the fuel tank 106 includes a liquified gas, such as hydrogen and/or methane. For example, the fuel tank 106 can include liquefied hydrogen. In some such examples, the fuel tank 106 can contain hydrogen in various states, including liquid, gaseous, supercritical, cryogenic, and/or cryo-compressed states. The fuel tank 106 can be stored in any suitable location on the aircraft (e.g., in the wings, in the fuselage, in an external tank, etc.). In some examples, the fuel tank 106 can be implemented by multiple include multiple tanks (herein referred to as a tank bank, etc.). Additionally or alternatively, the aircraft 100 can include one or more fuel tanks in addition to the fuel tank 106. In some such examples, the additional fuel tanks can be distribution fuel to the gas turbine engine 102 via the fuel distribution and thermal management system 104.

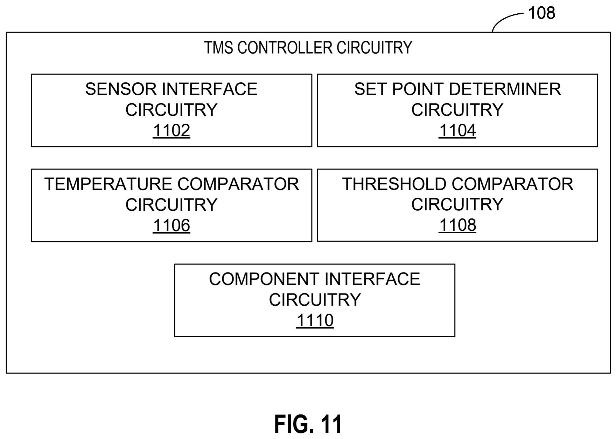

The TMS controller circuitry 108 controls and/or regulates the operation of the fuel distribution and thermal management system 104. In some examples, the TMS controller circuitry 108 accesses sensor information from sensors of the gas turbine engine 102, the aircraft 100, and/or the fuel distribution and thermal management system 104. In some examples, the TMS controller circuitry 108 can compare the temperature of the fuel in the recirculation circuit of the fuel distribution and thermal management system 104 to a temperature set point of the components cooled by the fuel distribution and thermal management system 104. In some examples, the TMS controller circuitry 108 can interface with a component of the fuel distribution and thermal management system 104 (e.g., a compressor, an expansion valve, an air duct shutter, an air duct door, etc.) to modify the cooling provided by the fuel distribution and thermal management system 104. An example implementation of the fuel distribution and thermal management system 104 is described below in conjunction with FIG. 11.

FIG. 2 is a simplified schematic diagram of an example first fuel distribution and thermal management system 200 that can implement the fuel distribution and thermal management system 104 of FIG. 1. In the illustrated example of FIG. 2, the first fuel distribution and thermal management system 200 is disposed in the gas turbine engine 102 of FIG. 1 and interfaces with the TMS controller circuitry 108 of FIG. 1.

In the illustrated example of FIG. 2, the first fuel distribution and thermal management system 200 includes a first fuel flow line 202 and a second fuel flow line 204. In the illustrated example of FIG. 2, the second fuel flow line 204 is a recirculation flow circuit (e.g., a recirculation circuit, etc.) that is coupled to the first fuel flow line at a first point 206 (e.g., a circuit inlet, an inlet, etc.) and a second point 208 (e.g., a circuit outlet, an outlet, etc.). In the illustrated example of FIG. 2, the first fuel flow line 202 extends between a fuel inlet 209 of an aircraft fuel system 210 and downstream engine systems 212. In the illustrated example of FIG. 2, the first fuel flow line 202 is coupled to a fuel pump 214. In the illustrated example of FIG. 2, the second fuel flow line 204 includes a fuel cooler 215, heat-producing component(s) 216, and a valve 218. In the illustrated example of FIG. 2, the second fuel flow line 204 is coupled to a first bypass 220 (e.g., a first bypass, etc.) that extends around the fuel cooler 215 and a second bypass 222 (e.g., a second bypass, etc.) that extends around the heat-producing component(s) 216.

The fuel flow lines 202, 204 are one or more fluid conduits through which fuel flows during the operation of the gas turbine engine 102. For example, the fuel flow lines 202, 204 can include one or more tubes, pipes, and/or other conduits that enable the flow of fuel therethrough. In the illustrated example of FIG.2, the first fuel flow line 202 is the main fuel line through the gas turbine engine 102 (e.g., the first fuel flow line 202 is the primary path for fuel between the fuel tank 106 and the combustion section of the gas turbine engine 102, etc.). In other examples, the first fuel flow line 202 can be an auxiliary flow line of fuel through the gas turbine engine 102.

The second fuel flow line 204 is a recirculation flow circuit that branches from the first fuel flow line 202 at the first point 206 and returns to the first fuel flow line 202 at the second point 208. In the second fuel flow line 204, a portion of the fuel flowing from the aircraft fuel system 210 is cooled at the fuel cooler 215 and used to cool the heat-producing component(s) 216. In the illustrated example of FIG.2, the second point 208 is upstream of the first point 206 along the first fuel flow line 202. That is, the outlet of the second fuel flow line 204 (e.g., the second point 208, etc.) is upstream of the inlet of the second fuel flow line 204 (e.g., the first point 206, etc.) along the first fuel flow line 202. In the illustrated example of FIG. 2, the positioning of the points 206, 208 causes a portion of the fuel flowing through the first fuel flow line 202 to be recirculated through the first fuel flow line 202. In other examples, the first point 206 and the second point 208 can have any other suitable positions (e.g., the first point 206 is upstream of the second point 208, etc.).

The aircraft fuel system 210 includes the fuel tank(s) of the aircraft associated with the first fuel distribution and thermal management system 200 (e.g., the aircraft 100 of FIG. 1, etc.). For example, the aircraft fuel system 210 can include the fuel tank 106 of FIG. 1 and the aircraft fuel distribution system 107. In the illustrated example of FIG. 2, the aircraft fuel system 210 is coupled to the fuel inlet 209 of the first fuel flow line 202. In some examples, the aircraft fuel system 210 can include an accumulator fuel tank disposed in the gas turbine engine 102 that is immediately upstream of the gas turbine engine 102. The downstream engine systems 212 include systems of the gas turbine engine 102 that receive the fuel after recirculation through the second fuel flow line 204. For example, the downstream engine systems 212 can include the combustion section of the gas turbine engine 102, one or more heat exchangers (e.g., a fuel cooled oil cooler (FCOC), etc.), the main fuel pump of the gas turbine engine, a fuel metering valve (FMV), and/or any other suitable components, etc.

The fuel pump 214 is disposed in the flow path through the first fuel flow line 202 and drives the flow of fuel therethrough. In some examples, the fuel pump 214 is an electric pump. In other examples, the fuel pump 214 is driven by the accessory gearbox (AGB) associated with the gas turbine engine 102. In the illustrated example of FIG. 2, the fuel pump 214 is disposed within the gas turbine engine 102 (e.g., the fuel pump 214 is domestic to the gas turbine engine 102, etc.). In some examples, the fuel pump 214 is the main fuel pump (MFP) of the gas turbine engine 102. In the illustrated example of FIG. 2, the fuel pump 214 is disposed along the first fuel flow line 202 between the first point 206 and the second point 208. In other examples, the fuel pump 214 is disposed upstream of the first point 206 and/or downstream of the second point 208 along the first fuel flow line 202. In the illustrated example of FIG. 2, the fuel pump 214 is coupled to the first fuel flow line 202. In some examples, the fuel pump 214 can be implemented by a plurality of pumps. For example, the fuel pump 214 can include a boost pump (e.g., a boost stage, etc.) and a high-pressure pump (e.g., a high pressure stage, etc.). In other examples, the fuel pump 214 is implemented by the boost stage of the main fuel pump of the gas turbine engine 102. Additionally or alternatively, the second fuel flow line 204 can include a pump that drives the flow of fuel therethrough.

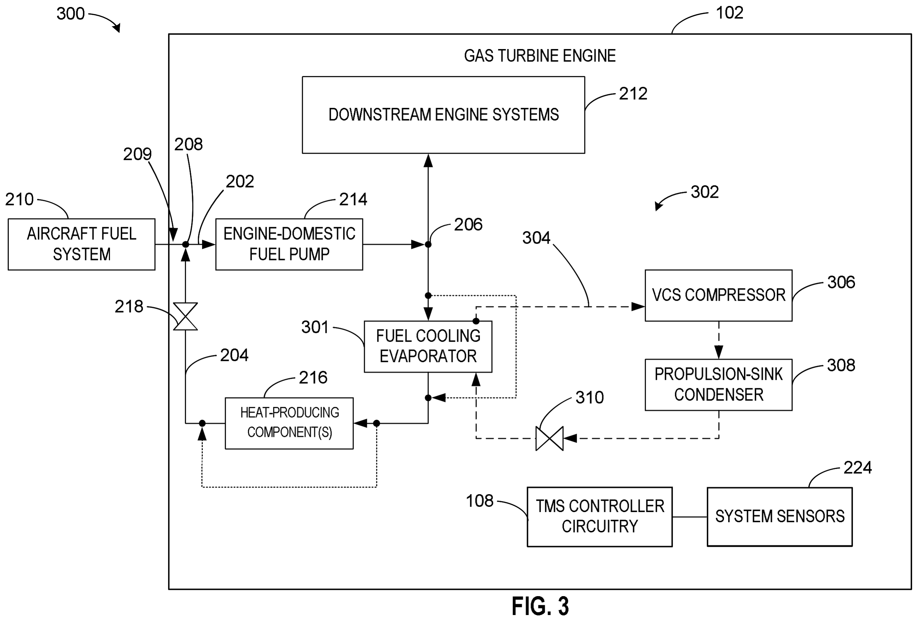

The fuel cooler 215 is a heat exchanger that cools the fuel flowing through the second fuel flow line 204. In some examples, the fuel cooler 215 can receive a flow of refrigerant from a refrigeration system disposed within the gas turbine engine 102. The fuel cooler 215 reduces the temperature of the fuel to a temperature to cool the heat-producing component(s) 216 (e.g., a temperature lower than the operation temperature of the heat-producing component(s) 216, etc.). In other examples, the fuel cooler 215 can be implemented by a different type of heat exchanger (e.g., a heat exchanger of the air cycle system, a radiator, etc.). Example implementations of the fuel cooler 215 and refrigeration systems that can implement the fuel cooler 215 are described below in conjunction with FIGS. 3-6.

The heat-producing component(s) 216 are components of the gas turbine engine 102 are temperature-sensitive components that are cooled during the operation of the gas turbine engine 102. For example, the heat-producing component(s) 216 can include electrical components of the gas turbine engine 102. In some examples, the heat-producing component(s) 216 can include one or more power distribution management units (PDMUs), one or more motor generators, one or more converters (e.g., inverter convertor controllers, etc.). Additionally or alternatively, the heat-producing component(s) 216 can include one or more heat exchangers to exchange heat with other fluid flows associated with the gas turbine engine 102 (e.g., one or more fuel cooled oil coolers, a lubricant cooler associated with a gearbox of the gas turbine engine, etc.), one or more bearings of the gas turbine engine 102, etc.). In some examples, because of the relatively low temperature of the fuel exiting the fuel cooler 215 (e.g., compared to the temperature of the fuel at other locations in the gas turbine engine 102, compared to the temperature of the lubricant of the gas turbine engine 102, etc.), the heat-producing component(s) 216 can be implemented by low-temperature components (e.g., low-temperature electronics, low-temperature mechanical components, etc.). That is, the second fuel flow line 204 is able to cool components at relatively lower temperatures than the prior thermal management systems of gas turbine engines.

The valve 218 is disposed in the second fuel flow line 204. In some examples, the valve 218 is a control valve that regulates the properties of the fuel flowing the second fuel flow line 204 (e.g., the flow rate, the volume, etc.). For example, the valve 218 can be implemented by a globe valve, an angle valve, a ball valve, a linear valve, and/or a butterfly valve. In some examples, the relative proportion of fuel that is recirculated through the second fuel flow line 204 and the relative proportion of the fuel that flows to the downstream engine systems 212 is controlled by the position of the valve 218. In some such examples, the position of the valve 218 can be regulated by the TMS controller circuitry 108 of FIG. 1 based on the fuel demand of the gas turbine engine 102, the current temperature of the heat-producing component(s) 216, and/or the heat output of the heat-producing component(s) 216. In other examples, the valve 218 is a shut-off valve, which actuates between two positions to enable or prevent the flow of fuel through the second fuel flow line 204. In other examples, the valve 218 is absent. In some such examples, the relative proportions of fuel flowing the second fuel flow line 204 and downstream to the downstream engine systems 212 is determined with a metering orifice and/or a fixed ratio that is controlled by the geometry of the fuel flow lines 202, 204.

The bypasses 220, 222 are flow conduits that enable some or all of the fuel flowing through the second fuel flow line 204 to bypass the fuel cooler 215 and/or the heat-producing component(s) 216, respectively. In some examples, the portions of fuel flowing through the fuel cooler 215 and the heat-producing component(s) 216 are regulated by valves (not illustrated) disposed at the junction of the bypasses 220, 222. In some examples, one or both of the bypasses 220, 222 are absent. That is, in some examples, the fuel flowing through the second fuel flow line 204 flows through the fuel cooler 215 (e.g., when the first bypass 220 is absent, etc.) and/or flows through the heat-producing component(s) 216 (e.g., when the second bypass 222 is absent, etc.).

In the illustrated example of FIG. 2, the first fuel distribution and thermal management system 200 includes system sensors 224. The system sensors 224 generate outputs associated with the operation of the first fuel distribution and thermal management system 200. For example, the system sensors 224 can include temperature sensors that generate outputs related to the temperature of fuel entering the heat-producing component(s) 216 and/or the temperature of the heat-producing component(s) 216. Additionally or alternatively, the system sensors 224 can include flow rate sensors (e.g., flowmeters, etc.) that determine the flow rate of fuel through the second fuel flow line 204. In other examples, the system sensors 224 can include additional sensors that measure other quantities related to the first fuel distribution and thermal management system 200, the gas turbine engine 102, and/or an aircraft including the first fuel distribution and thermal management system 200 (e.g., the aircraft 100 of FIG. 1, etc.). For example, the system sensors 224 can measure the power setting of the gas turbine engine 102, an altitude of the aircraft 100, a temperature of the fuel, a density of the fuel, a pressure of the fuel, etc.

During operation, fuel is pumped through the first fuel flow line 202 and the second fuel flow line 204 by the fuel pump 214. As described above, the relative positioning of the points 206, 208 of the second fuel flow line 204 causes a portion of the fuel flowing through the first fuel flow line 202 to be recirculated through the second fuel flow line 204. The fuel recirculated through the second fuel flow line 204 is sequentially chilled in the fuel cooler 215, used to cool the heat-producing component(s) 216, flows through the valve 218, and returns to the first fuel flow line 202 downstream of the fuel pump 214.

FIG. 3 is a simplified schematic diagram of an example second fuel distribution and thermal management system 300 that can implement the fuel distribution and thermal management system 104 of FIG. 1. In the illustrated example of FIG. 3, the second fuel distribution and thermal management system 300 is disposed in the gas turbine engine 102 of FIG. 1 and regulated by the TMS controller circuitry 108 of FIG. 1. In the illustrated example of FIG. 3, the TMS controller circuitry 108 receives input(s) from the system sensors 224 of FIG. 2.

In the illustrated example of FIG. 3, the second fuel distribution and thermal management system 300 includes the first fuel flow line 202 of FIG. 2, the second fuel flow line 204 of FIG. 2, the aircraft fuel system 210 of FIG. 2, the downstream engine systems 212 of FIG. 2, the fuel pump 214 of FIG. 2, the fuel cooler 215 of FIG. 2, the heat-producing component(s) 216 of FIG. 2. In the illustrated example of FIG. 2, the first fuel flow line 202, the second fuel flow line 204, and the components associated therewith (e.g., the aircraft fuel system 210, the downstream engine systems 212, the fuel pump 214, the fuel cooler 215, the heat-producing component(s) 216, etc.) are disposed in the same configuration of FIG. 2, except as noted otherwise. In the illustrated example of FIG. 3, the second fuel distribution and thermal management system 300 includes the system sensors 224. In the illustrated example of FIG. 3, the fuel cooler 215 is implemented by a fuel cooling evaporator 301 (e.g., a fuel cooler, a cooler, etc.). In the illustrated example of FIG. 3, the fuel cooling evaporator 301 is coupled to a first VCS refrigeration system 302. The first VCS refrigeration system 302 includes a refrigerant flow line 304, a compressor 306, a condenser 308, and an expansion valve 310.

The refrigerant flow line 304 includes one or more flow conduits that include a refrigerant. In some examples, the refrigerant of the refrigerant flow line 304 can include a hydrochlorofluorocarbon (HCFC) (e.g., R22, R123, R124, etc.), a hydrofluorocarbon (e.g., R32, R125, R134, etc.), a fluorocarbon (R218), a hydro-fluoro-olefin (HFO), ammonia, carbon dioxide, any other type of refrigerant, and/or a combination thereof. In the illustrated example of FIG. 3, the refrigerant flow line 304 is a flow circuit (e.g., a closed circuit, a refrigerant flow circuit, etc.). That is, the refrigerant of the refrigerant flow line 304 is recycled through the refrigerant flow line 304 during operation thereof.

The first VCS refrigeration system 302 is a vapor cycle system (VCS) that drives a refrigerant through the refrigerant flow line 304 and cools the fuel flowing through the second fuel flow line 204 via the fuel cooling evaporator 301. In some examples, the system sensors 224 can measure one or more temperature(s) and/or pressure(s) of the refrigerant in the refrigerant flow line 304, a position of the expansion valve 310, and/or a speed output of the compressor 306. During operation, the refrigerant in the refrigerant flow line 304 enters the compressor 306 as a superheated vapor. The compressor 306 increases the pressure of the refrigerant such that the saturated temperature of the refrigerant is able to liquify the refrigerant in the condenser 308. In some examples, the compressor 306 is an electrically powered compressor (e.g., powered by the electric system of the gas turbine engine 102, etc.). Additionally or alternatively, the compressor 306 is driven by an accessory gear box of the gas turbine engine 102. After exiting the compressor, the superheated, high-temperature vapor refrigerant in the refrigerant flow line 304 enters the condenser 308. The condenser 308 is a heat exchanger that cools the refrigerant in the refrigerant flow line 304 into a subcooled liquid (e.g., a liquid cooled beneath the boiling temperature thereof, etc.). In some examples, the condenser 308 is a propulsion sink condenser. In some such examples, the condenser 308 is configured to exchange heat between the refrigerant and an air flow through of the gas turbine engine 102 (e.g., a bleed flow of the gas turbine engine 102, a bypass flow of the gas turbine engine 102, a downstream fuel flow, etc.).

After exiting the condenser 308, the subcooled liquid refrigerant in the refrigerant flow line 304 enters the expansion valve 310. The expansion valve 310 reduces the pressure at constant enthalpy of the refrigerant in the refrigerant flow line 304, which causes a temperature reduction of the refrigerant. In some examples, the refrigerant undergoes a phase change in the expansion valve 310 (e.g., based on the amount of subcooling of the refrigerant entering the expansion valve. In some such examples, the TMS controller circuitry 108 of FIG. 1 can control the expansion valve 310 such that refrigerant in the refrigerant flow line 304 exiting the fuel cooling evaporator 301 is a superheated vapor (e.g., to facilitate the cooling of the fuel in the second fuel flow line 204 and protect the compressor from liquid slugging, etc.).

After exiting the expansion valve 310, the saturated vapor/liquid mixture of refrigerant enters the fuel cooling evaporator 301 and cools the fuel flowing through the second fuel flow line 204. In the fuel cooling evaporator 301, heat is exchanged between the fuel in the second fuel flow line 204 and the refrigerant in the refrigerant flow line 304. In some examples, the fuel cooling evaporator 301 can be implemented by a circulation evaporator, a falling film evaporator, a rising film evaporator, a plate fin heat exchanger, a shell and tube heat exchanger, an additive heat exchanger, and/or any other suitable type of evaporator. In some examples, the TMS controller circuitry 108 of FIG. 1 controls the position of the expansion valve 310 and the power supplied to the compressor 306 such that the refrigerant exiting the fuel cooling evaporator 301 is a vapor with a constant amount of superheat (e.g., all of the refrigerant is evaporated in the fuel cooling evaporator 301, etc.) and/or the fuel exiting the fuel cooler is at a preset fuel temperature (e.g., a predetermined fuel temperature, etc.).

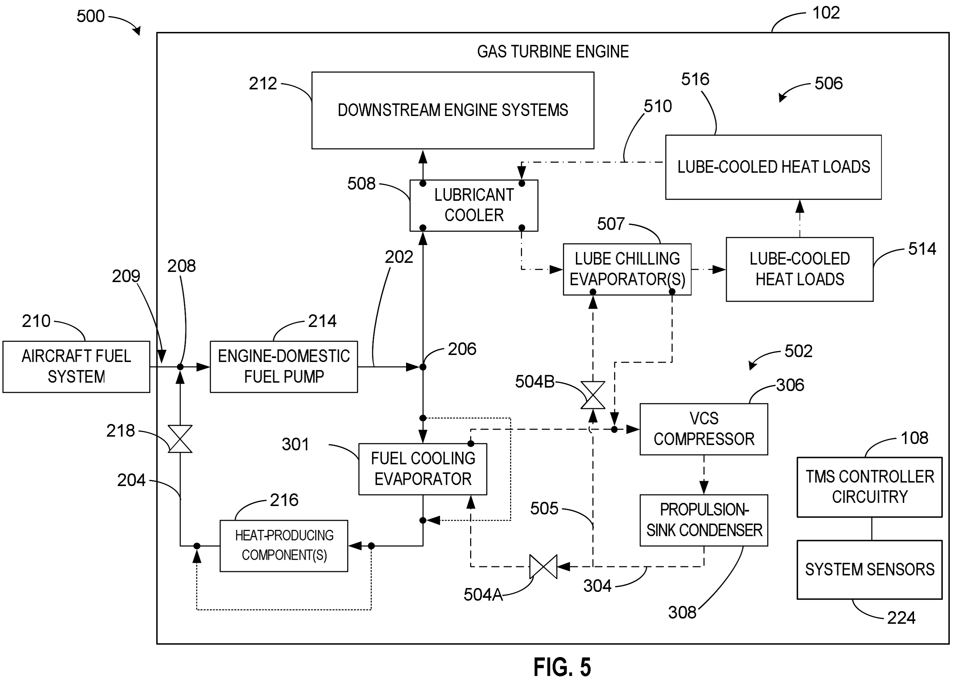

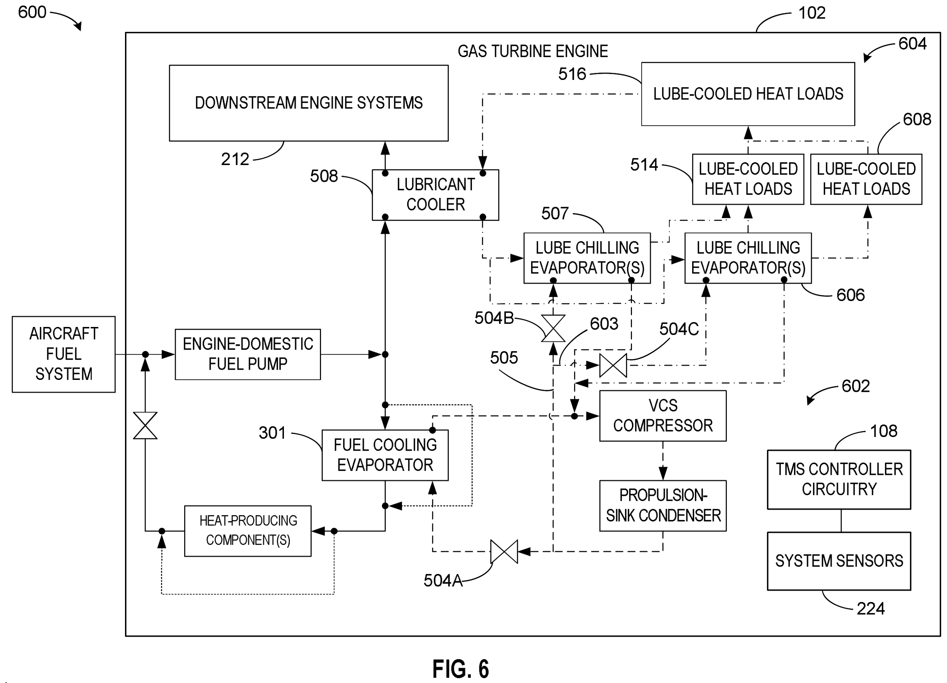

In the illustrated example of FIG. 3, the first VCS refrigeration system 302 includes a single evaporator and expansion valve (e.g., the fuel cooling evaporator 301 and the expansion valve 310, etc.), which cools the fuel in the second fuel flow line 204. In other examples, the first VCS refrigeration system 302 can include additional evaporator(s) and/or valve(s), which cool other flows of the gas turbine engine 102 (e.g., the flow of a lubricant in the gas turbine engine 102, etc.). While a single refrigeration system (e.g., the first VCS refrigeration system 302, etc.) is depicted in the illustrated example of FIG. 3, in other examples, the second fuel distribution and thermal management system 300 can include one or more additional refrigeration system(s) (e.g., additional VCS refrigeration system 302, etc.). Example fuel distribution and thermal management systems that include vapor cycle refrigeration systems that cool multiple fuel flows and/or components are described below in conjunction with FIGS. 5 and 6.

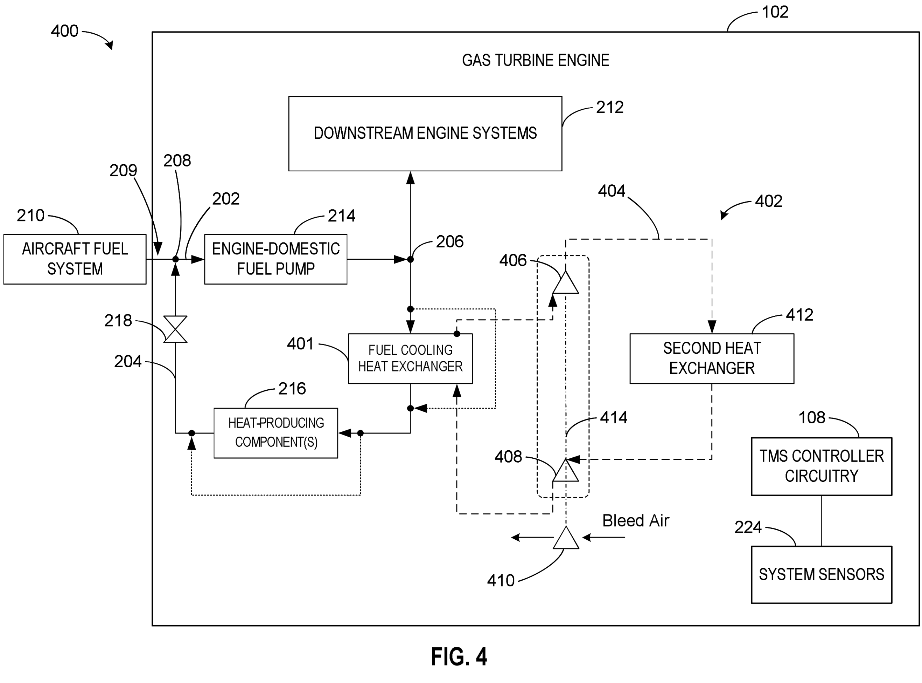

FIG. 4 is a simplified schematic diagram of an example third fuel distribution and thermal management system 400 that can implement the fuel distribution and thermal management system 104 of FIG. 1. In the illustrated example of FIG. 4, the third fuel distribution and thermal management system 300 is disposed in the gas turbine engine 102 of FIG. 1 and regulated by the TMS controller circuitry 108 of FIG. 1. In the illustrated example of FIG. 4, the TMS controller circuitry 108 receives input(s) from the system sensors 224 of FIG. 2.

In the illustrated example of FIG. 4, the first fuel distribution and thermal management system 300 includes the first fuel flow line 202 of FIG. 2, the second fuel flow line 204 of FIG. 2, the aircraft fuel system 210 of FIG. 2, the downstream engine systems 212 of FIG. 2, the fuel pump 214 of FIG. 2, the fuel cooler 215 of FIG. 2, the heat-producing component(s) 216 of FIG. 2. In the illustrated example of FIG. 4, the first fuel flow line 202, the second fuel flow line 204, and the components associated therewith (e.g., the aircraft fuel system 210, the downstream engine systems 212, the fuel pump 214, the fuel cooler 215, the heat-producing component(s) 216, etc.) are disposed in the same configuration of FIG. 2, except as noted otherwise. In the illustrated example of FIG. 4, the fuel cooler 215 is implemented by a fuel cooling heat exchanger 401. In the illustrated example of FIG. 4, the fuel cooling heat exchanger 401 is coupled to an ACS refrigeration system 402. The ACS refrigeration system 402 includes a refrigerant flow line 404, a compressor 406, a first turbine 408, a second turbine 410, and a second heat exchanger 412.

The refrigerant flow line 404 is one or more flow conduits that include a refrigerant. In some examples, the refrigerant flow line 404 includes air as a refrigerant (e.g., the refrigerant flow line 404 is an air flow circuit, etc.). In other examples, the refrigerant flow line 404 can use a different gas as a refrigerant. The ACS refrigeration system 402 is an air cycle system (ACS) (e.g., a reverse Brayton cycle system, etc.) that drives a refrigerant (e.g., air, etc.) through the refrigerant flow line 404 and cools the fuel flowing through the second fuel flow line 204 via the fuel cooling heat exchanger 401. In some examples, the ACS refrigeration system 402 is associated with other systems of the gas turbine engine 102 and/or the aircraft 100 of FIG. 1. For example, the ACS refrigeration system 402 can be used to regulate the flow of air into the cabin of the aircraft 100. In some such examples, the ACS refrigeration system 402 can include an intermediate thermal transport bus including a buffer fluid (e.g., a buffer thermal transport fluid, a refrigerant, etc.) to mitigate potential leaks of fuel into an air flow entering the cabin of the aircraft 100.

During operation, hot refrigerant (e.g., air, etc.) in the refrigerant flow line 404 enters the compressor 406. The compressor 406 compresses the refrigerant, which further increases the temperature of the refrigerant. In some examples, the compressor 406 is a centrifugal compressor. In other examples, the compressor 406 can be another type of compressor (e.g., an axial compressor, a screw compressor, a reciprocating compressor, etc.). After exiting the compressor 406, the heated compressed air flows through the refrigerant flow line 404 to the second heat exchanger 412. In the second heat exchanger 412, the heated compressed air is cooled. In some examples, the second heat exchanger 412 exchanges heat between the refrigerant flow line 404 and a propulsion stream of the gas turbine engine 102 (e.g., a bypass flow of the gas turbine engine, a third stream of the gas turbine engine, etc.). In other examples, the second heat exchanger 412 can be configured to dissipate (e.g., rejects, etc.) heat from the refrigerant in the refrigerant flow line 404 into the ambient environment of the gas turbine engine 102. In some such examples, the second heat exchanger 412 is a radiator.

After exiting the second heat exchanger 412, the refrigerant in the refrigerant flow line 404 enters the first turbine 408. The first turbine 408 is an expansion turbine, which extracts heat from the refrigerant in the refrigerant flow line 404, which cools the refrigerant below the temperature of the fuel in the second fuel flow line 204. In the illustrated example of FIG. 4, the first turbine 408 is coupled to the compressor 406 via a shaft 414, and the work extracted from the first turbine 408 is transmitted through the shaft 414 and used to drive (e.g., partially drive, etc.) the rotation of the compressor 406. In the illustrated example of FIG. 4, the second turbine 410 is coupled to the shaft 414. In the illustrated example of FIG. 4, the second turbine 410 is a power turbine that extracts air from a bleed flow. For example, the second turbine 410 can draw power from a bleed flow from a compressor disposed in the core flow path of the gas turbine engine 102. In the illustrated example of FIG. 4, the second turbine 410 is further used to drive the operation of the compressor 406 via the shaft 414. After exiting the first turbine 408, the cooled refrigerant enters the fuel cooling heat exchanger 401 and the cooled refrigerant cools the fuel flowing the refrigerant flow line 404.

FIG. 5 is a simplified schematic diagram of an example fourth fuel distribution and thermal management system 500 that can implement the fuel distribution and thermal management system 104 of FIG. 1. In the illustrated example of FIG. 5, the fourth fuel distribution and thermal management system 500 is disposed in the gas turbine engine 102 of FIG. 1 and regulated by the TMS controller circuitry 108 of FIG. 1. In the illustrated example of FIG. 5, the TMS controller circuitry 108 receives input(s) from the system sensors 224 of FIG. 2 to determine the temperature of the fuel in the second fuel flow line 204 and/or the temperature of the heat-producing components 216.

In the illustrated example of FIG. 5, the fourth fuel distribution and thermal management system 500 includes the first fuel flow line 202 of FIG. 2, the second fuel flow line 204 of FIG. 2, the aircraft fuel system 210 of FIG. 2, the downstream engine systems 212 of FIG. 2, the fuel pump 214 of FIG. 2, the fuel cooler 215 of FIG. 2, and the heat-producing component(s) 216 of FIG. 2. In the illustrated example of FIG. 5, the third fuel distribution and thermal management system 500 includes a second VCS refrigeration system 502. In the illustrated example of FIG. 5, the second VCS refrigeration system 502 includes the compressor 306 of FIG. 3, the condenser 308 of FIG. 3, a first expansion valve 504A, a second expansion valve 504B, and a lubricant cooling evaporator 507. The expansion valves 504A, 504B are similar to the expansion valve 310 of FIG. 3, except as noted otherwise.

In the illustrated example of FIG. 5, the fourth fuel distribution and thermal management system 500 includes a lubrication system 506 and a lubricant cooler 508 coupled thereto. In the illustrated example of FIG. 5, the lubricant cooling evaporator 507 is coupled to the lubrication system 506, which includes the lubricant cooler 508, a first heat-producing component(s) 514, and a second heat-producing component(s) 516.

The second VCS refrigeration system 502 is similar to the first VCS refrigeration system 302 of FIG. 3, except as noted otherwise. Similarly to the first VCS refrigeration system 302 of FIG. 3, the heated refrigerant flowing in the refrigerant flow line 304 is compressed and condensed by the compressor 306 and the condenser 308, respectively, after exiting the fuel cooling evaporator 301. In the illustrated example of FIG. 5, after exiting the condenser 308, the subcooled liquid refrigerant is split between the refrigerant flow line 304 and a branch flow line 505. In the illustrated example of FIG. 5, flow in the refrigerant flow line 304 flows through the first expansion valve 504A, which causes the saturated liquid refrigerant to further cool and change into a mixture of saturated liquid and vapor. After exiting the first expansion valve 504A, the saturated liquid/vapor refrigerant flows into the fuel cooling evaporate 301 and chills the fuel in a manner similar to the manner described in conjunction with FIG. 3. In the illustrated example of FIG. 5, flow in the branch flow line 505 enters the second expansion valve 504B, which causes the saturated liquid refrigerant to further cool and change into a mixture of saturated liquid and vapor. After exiting the second expansion valve 504B, the saturated liquid/vapor refrigerant flows into the lubricant cooling evaporator 507 and chills the lubricant of the lubricant flow line 510. In some examples, the position of the second expansion valve 504B is configured to cause the refrigerant exiting the lubricant cooling evaporator 507 to be fully evaporated and/or superheated.

The lubrication system 506 lubricates and cools heat-producing component(s) of the gas turbine engine 102 (e.g., the heat-producing component(s) 514, 516, etc.). In the illustrated example, the lubrication system 506 drives lubricant through the lubricant flow line 510. The lubrication system 506 is a dry sump system. In other examples, the lubrication system 506 is a wet sump system. The lubricant flow line 510 is a flow circuit (e.g., the lubricant flow line 510 is a lubricant flow circuit, etc.) that cycles a lubricant therethrough (e.g., a synthetic oil, a natural oil, etc.).

In the illustrated example of FIG. 5, cooled lubricant exits the lubricant cooling evaporator 507 and sequentially cools and/or lubricants the heat-producing component(s) 514, 516 (e.g., via convection directly over the components, via convection through a structure coupled thereto, etc.). In some examples, the first heat-producing component(s) 514 are electronic components (e.g., motor generators, etc.) associated with the gas turbine engine 102. In some examples, the first heat-producing component(s) 514 have a higher operating temperature than the heat-producing component(s) 216 (e.g., the first heat-producing component(s) 514 do not generate as much heat as the heat-producing component(s) 216, etc.). In some examples, the second heat-producing component(s) 516 are mechanical components of the gas turbine engine 102 (e.g., bearings, gearboxes, actuators, etc.). Additionally or alternatively, the heat-producing component(s) 514, 516 can include any other suitable heat-producing component(s) (e.g., other heat exchangers, etc.).

After cooling the second heat-producing component(s) 516, lubricant flows along the lubricant flow line 510 to the lubricant cooler 508. In some examples, the lubricant cooler 508 is a fuel cooled oil cooler (FCOC) that transfers heat from the lubricant into the fuel in the first fuel flow line 202. In the illustrated example of FIG. 5, the lubricant cooler 508 is downstream of the points 206, 208 (e.g., downstream of the second fuel flow line 204, etc.). In other examples, the lubricant cooler 508 can be upstream of the points 206, 208 and/or between the points 206, 208. In some examples, the lubricant cooler 508 is absent. In some examples, the flow order of the lubricant cooling evaporator 507 and the lubricant cooler 508 is reversed along the lubricant flow line 510 (e.g., the lubricant cooler 508 is downstream of the lubricant cooling evaporator 507 in the lubricant flow line 510, etc.).

FIG. 6 is a simplified schematic diagram of an example fifth fuel distribution and thermal management system 600 that can implement the fuel distribution and thermal management system 104 of FIG. 1. The fifth fuel distribution and thermal management system 600 is similar to the fourth fuel distribution and thermal management system 500, except as noted otherwise. In the illustrated example of FIG. 6, the fifth fuel distribution and thermal management system 600 includes a refrigeration system 602 and a lubrication system 604. The refrigeration system 602 is similar to the second VCS refrigeration system 502 except that the refrigeration system 602 includes a second branch line 603 downstream of the condenser 308, which splits from the first branch line 505. In the illustrated example of FIG. 6, the second branch line 603 includes a third expansion valve 504C that similarly evaporates the refrigerant flowing therethrough.

The lubrication system 604 is similar to the lubrication system 506 of FIG. 5, except that the lubrication system 604 includes a second lubricant cooler evaporator 606 and a third heat-producing component 608 that are disposed in parallel to the lubricant cooling evaporator 507 of FIG. 5 and the first heat-producing component(s) 514 of FIG. 5. In the illustrated example of FIG. 6, the lubricant cooler evaporators 604, 606 are disposed in parallel in the lubrication system 604. That is, lubricant leaving the lubricant cooler 508 flows through the lubricant cooler evaporators 604, 606 in parallel. In other examples, the lubricant cooler evaporators 604, 606 are disposed in sequence in the lubrication system 604. The refrigerant exiting the third expansion valve 504C cools the oil in the second lubricant cooler evaporator 606. In the illustrated example of FIG. 6, the lubricant exiting the second lubricant cooler evaporator 606 then cools the third heat-producing component 608 and rejoins the oil that cooled the first heat-producing component(s) 514 at the second heat-producing component(s) 516. In some examples, the first heat-producing component(s) 514 is a first motor generator associated with a first spool of the gas turbine engine 102 (e.g., a high-pressure spool, etc.), and the third heat-producing component 608 is a second motor generator associated with a first spool of the gas turbine engine 102 (e.g., a low-pressure spool, etc.).

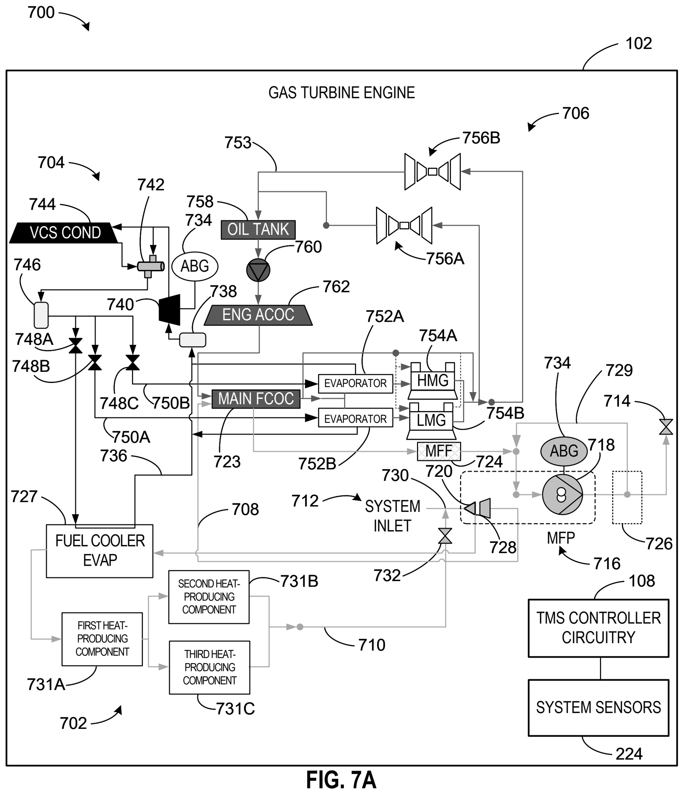

FIG. 7A is a schematic diagram of an example sixth fuel distribution and thermal management system 700 that can implement the fuel distribution and thermal management system 104 of FIG. 1. In the illustrated example of FIG. 7A, the sixth fuel distribution and thermal management system 300 is disposed in the gas turbine engine 102 of FIG. 1 and regulated by the TMS controller circuitry 108 of FIG. 1. In the illustrated example of FIG. 7A, the TMS controller circuitry 108 receives input(s) from the system sensors 224 of FIG. 2 to determine the temperature of the fuel in the second fuel flow line 204 and/or the temperature of the heat-producing components 216.

In the illustrated example of FIG. 7A, the sixth fuel distribution and thermal management system 700 includes an engine fuel distribution system 702, a refrigeration system 704, and a lubrication system 706. The sixth fuel distribution and thermal management system 700 is similar to the simplified fifth fuel distribution and thermal management system 600 of FIG. 6 except as noted otherwise. In the illustrated example of FIG. 7A, the engine fuel distribution system 702, the refrigeration system 704, and the lubrication system 706 are domestic to the gas turbine engine 102 (e.g., the engine fuel distribution system 702, the refrigeration system 704, and the lubrication system 706 are fully disposed within the gas turbine engine 102, etc.). In other examples, some or all of the components of the engine fuel distribution system 702, the refrigeration system 704, and/or the lubrication system 706 are external to the gas turbine engine 102.

In the illustrated example of FIG. 7A, the engine fuel distribution system 702 includes a first fuel flow line 708, a second fuel flow line 710, and an engine fuel system inlet 712. In the illustrated example of FIG. 7A, the first fuel flow line 708 extends between the engine fuel system inlet 712, and a nozzle 714. In the illustrated example of FIG. 7A, the engine fuel distribution system 702 includes a main fuel pump system 716, which includes a fixed displacement high pressure pump 718 and a booster pump 720. In the illustrated example of FIG. 7A, the first fuel flow line 708 further includes a main fuel filter 724 (MFF) and a fuel metering unit 726 (FMU).

The fuel flow lines 708, 710 are one or more fluid conduits through which fuel flows during the operation of the gas turbine engine 102. For example, the fuel flow lines 708, 710 can include one or more tubes, pipes, and/or other conduits that enable the flow of fuel therethrough. In the illustrated example of FIG. 7A, the first fuel flow line 708 is the main flow path of fuel within the gas turbine engine 102. In other examples, the first fuel flow line 708 can be an auxiliary flow line of fuel through the gas turbine engine 102. In the illustrated example of FIG. 2, the second fuel flow line 710 is a recirculation flow circuit that is coupled to the first fuel flow line 708 at a first point 728 (e.g., a circuit inlet, an inlet, etc.) and a second point 730 (e.g., a circuit outlet, an outlet, etc.). In the illustrated example of FIG. 7A, the second point 730 is upstream of the booster pump 720 and the first point 728 is a port of the booster pump 720 (e.g., an outlet of the booster pump 720, etc.). That is, the outlet of the second fuel flow line 710 (e.g., the second point 730, etc.) is upstream of the inlet of the second fuel flow line 710 (e.g., the first point 728, etc.) along the first fuel flow line 708. In the illustrated example of FIG. 7A, the positioning of the points 728, 730 causes a portion of the fuel flowing through the engine fuel distribution system 702 to be recirculated through the second fuel flow line 710. In other examples, the first point 728 and the second point 730 can have any other suitable positions and the relationship (e.g., the points 728, 730 are downstream of the booster pump 720, the second point 730 is further downstream along the first fuel flow line 708. In the illustrated example of FIG. 7A, the second fuel flow line 710 includes a fuel cooling evaporator 727 (e.g., a cooler, a fuel cooler, etc.), a first heat-producing component 731A, a second heat-producing component 731B, a third heat-producing component 731C, and a valve 732. The fuel cooling evaporator 727 and the valve 732, are similar to the fuel cooling evaporator 301 of FIGS. 3, 5, and 6 and the valve 218 of FIGS. 2-6 except as noted otherwise.

The heat-producing component(s) 731A, 731B, 731C are similar to the heat-producing component(s) 216 of FIGS. 2-6, except as noted otherwise. In some examples, the heat-producing component(s) 731A, 731B, 731C are electric components of the gas turbine engine 102. For example, the first heat-producing component 731A is a power distribution management unit (PDMU), and the heat-producing component(s) 731B, 731C are inverter convertor controllers (e.g., the second heat-producing component 731B is an inverter converter controller associated with a low-pressure spool of the gas turbine engine 102, the third heat-producing component 731C is an inverter converter controller associated with a low-pressure spool of the gas turbine engine 102, etc.). In some examples, the heat-producing component(s) 731A, 731B, 731C are the cooled components of the gas turbine engine 102 that have the lowest operational temperature . In some such examples, because a component can be cooled by a flow at a lower temperature, the heat-producing component(s) 731A, 731B, 731C are the components of the gas turbine engine 102 that utilize a coolant immediately downstream of the fuel cooling evaporator 727.

In the illustrated example of FIG. 7A, fuel in the second fuel flow line 710 flows through the second heat-producing component 731B and the third heat-producing component 731C in parallel. In other examples, the second heat-producing component 731B, and the third heat-producing component 731C are positioned in sequence. While three heat-producing component(s) are illustrated in FIG. 7A (e.g., the heat-producing component(s) 731A, 731B, 731C, etc.), in other examples, the engine fuel distribution system 702 can include a different quantity of heat-producing component(s) (e.g., other electronic components, mechanical components, etc.) arranged in other arrangements.

The main fuel filter 724 is a filter that removes particulate matter and/or other liquids (e.g., lubricant, water, etc.) flowing through the first fuel flow line 708 prior to flowing through the fuel pump 718, the FMU 726, and the nozzle 714. The FMU 726 is a system that regulates the volume and/or mass of fuel that enters the nozzle 714. The FMU 726 is also referred to herein as a fuel metering valve (FMV). In the illustrated example of FIG. 7A, the FMU 726 can regulate the volume and/or mass of fuel that enters the nozzle 714 by regulating the flow of fuel through a recirculation line 729. The fuel pump 718 is a fixed displacement pump that drives fuel through the first fuel flow line 708. In some examples, the fuel pump 718 can be controlled to regulate the volume of fuel flowing through the first fuel flow line 708. In the illustrated example of FIG. 7A, the fuel pump 718 is a gear pump. In other examples, the fixed displacement fuel pump 718 is a variable vane pump. In other examples, the fixed displacement fuel pump 718 can be implemented by an axial piston pump. In some examples, the FMU 726 and the fuel pump 718 can be controlled based on a power demand of the gas turbine engine 102 (e.g., based on an input of an operator of the gas turbine engine 102, based on a flight phase of the gas turbine engine 102, etc.). In the illustrated example of FIG. 7A, the main fuel pump system 716 is powered by the accessory gear box 734 of the gas turbine engine 102. In other examples, the main fuel pump system 716 can be powered by an electric system of the gas turbine engine 102 (e.g., via power provided by one of the heat-producing component(s) 731A, 731B, 731C, etc.). The nozzle 714 is a mechanical structure that directs the flow of fuel into the combustion section of the gas turbine engine 102. It should be appreciated the gas turbine engine 102 can include a plurality of nozzles similar to the nozzle 714.

During operation, fuel enters the first fuel flow line 708 from the engine fuel system inlet 712. The engine fuel system inlet 712 is the inlet of the gas turbine engine 102 that receives fuel. For example, the engine fuel system inlet 712 can be coupled to the aircraft fuel system 210 of FIGS. 2-6 and/or the fuel tank 106 of FIG. 1. Fuel is driven through the first fuel flow line 708 by the main fuel pump system 716 (e.g., the fuel pump 718, the booster pump 720, etc.). In the illustrated example of FIG. 7A, fuel in the first fuel flow line 708 flows through the booster pump 720 to the first lubricant cooler 723. The first lubricant cooler 723 is a FCOC that transfers heat from the oil into the fuel in the first fuel flow line 708. The first lubricant cooler 723 is similar to the lubricant cooler 508 of FIG. 5 except as noted otherwise. After flowing the first lubricant cooler 723, fuel in the first fuel flow line sequentially flows through the main fuel filter 724, the fuel pump 718, and the FMU 726. In the illustrated example of FIG. 7A, after exiting the FMU 726, the fuel enters the nozzle 714 and into the combustion section of the gas turbine engine 102.

At the booster pump 720, a portion of the fuel flowing through the first fuel flow line 708 is diverted into the second fuel flow line 710 at the first point 728. Fuel in the second fuel flow line 710 enters the fuel cooling evaporator 727. In the fuel cooling evaporator 727, heat is exchanged between the fuel in the second fuel flow line 710 and refrigerant in the refrigeration system 704, which cools the fuel in the second fuel flow line 710. The cooled fuel exiting the fuel cooling evaporator 727 flows over the heat-producing component(s) 731A, 731B, 731C, which cools them. After cooling the heat-producing component(s) 731A, 731B, 731C, fuel flows through the valve 732. The valve 732 is a control valve that regulates the volume of fuel flowing through the second fuel flow line 710. After exiting the valve 732, fuel rejoins the first fuel flow line 708 at the second point 730, upstream of the booster pump 720.

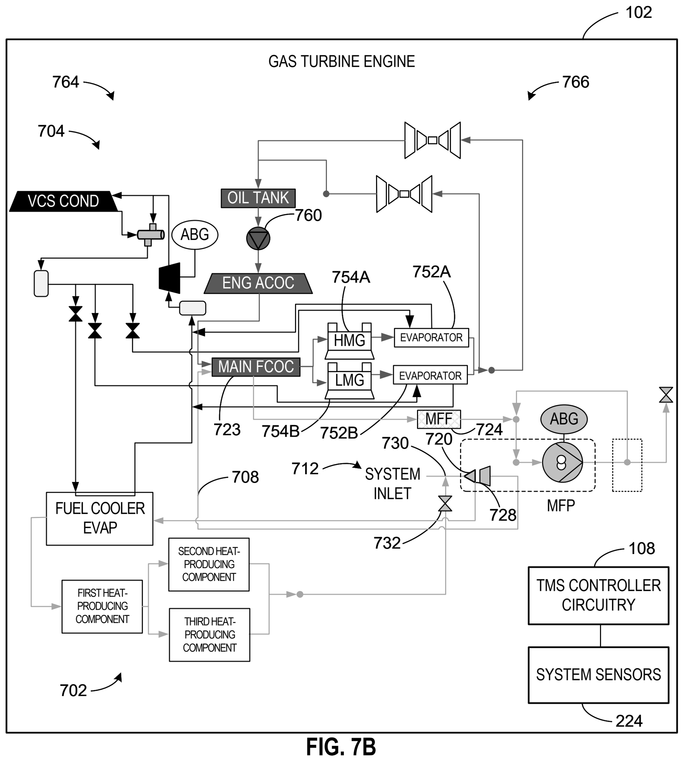

In the illustrated example of FIG. 7A, the refrigeration system 704 includes a refrigerant flow line 736, an accumulator 738, a compressor 740, a head pressure control valve 742 (HPCV), a condenser 744, a receiver 746, a first expansion valve 748A, a second expansion valve 748B, a third expansion valve 748C, a first branch refrigerant flow line 750A, and a second branch refrigerant flow line 750B. In the illustrated example of FIG.7, the refrigeration system 704 is a VCS that is similar to the refrigeration system 602 of FIG. 6. In other examples, the refrigeration system 704 is similar to the second VCS refrigeration system 502 of FIG. 5 (e.g., the third expansion valve 748C and the second branch refrigerant flow line 750B are absent, etc.) and/or the first VCS refrigeration system 302 of FIG. 3 (e.g., the expansion valves 748A, 748B and branch refrigerant flow lines 750A, 750B are absent, etc.). In other examples, the refrigeration system 704 is an ACS similar to the ACS refrigeration system 402 of FIG. 4.

The refrigerant flow line 736 and the branch refrigerant flow lines 750A, 750B are flow conduit(s) that include a refrigerant. In some examples, the refrigerant of the refrigerant flow lines 736, 750A, 750B can include a hydrochlorofluorocarbon (HCFC) (e.g., R22, R123, R124, etc.), a hydrofluorocarbon (e.g., R32, R125, R134, etc.), a fluorocarbon (R218), ammonia, carbon dioxide, any other suitable type of refrigerant, and/or a combination thereof. In the illustrated example of FIG. 7A, the refrigerant flow line 736 and the branch refrigerant flow lines 750A, 750B are arranged in a flow circuit (e.g., closed circuit, refrigerant flow circuit, etc.). That is, the refrigerant of the refrigerant flow lines 736, 750A, 750B is recycled through the refrigeration system 704 during operation thereof.

During operation, heated vapor refrigerant in the refrigerant flow line 736 exits the fuel cooling evaporator 727 to the accumulator 738. The accumulator 738 (e.g., also referred to herein as a suction accumulator, etc.) is disposed upstream of the compressor 740. The accumulator 738 is a refrigerant reservoir that prevents liquid refrigerant from entering the compressor 740, which can hinder the operation thereof. In some examples, the accumulator 738 is absent. After exiting the accumulator 738, the vaporous refrigerant enters the compressor 740, which increases the pressure of the refrigerant such that the condenser 744 can liquify (e.g., completely liquify, etc.) and subcool the refrigerant flowing therethrough. The compressor 740 is similar to the compressor 306 of FIGS. 3, 5, and 6, except as noted otherwise. In the illustrated example of FIG. 7A, the compressor 740 is powered by the accessory gear box 734 of the gas turbine engine 102. In other examples, the compressor 740 is powered by an electric motor associated with an electric system of the gas turbine engine 102 (e.g., via power supplied by one of the heat-producing component(s) 731A, 731B, 731C, etc.).

After exiting the compressor 740, the superheated vapor refrigerant enters the HPCV 742 and the condenser 744. In the condenser 744, the superheated vapor refrigerant is cooled and condensed into a saturated vapor. The condenser 744 is similar to the condenser 308 of FIGS. 3, 5, and 6 except as noted otherwise. In some examples, the condenser 744 is a propulsion sink condenser that cools refrigerant via an air flow through the gas turbine engine 102 (e.g., a third-stream air flow of the gas turbine engine 102, a bypass flow of the gas turbine engine 102, etc.). The HPCV 742 is a valve that regulates the pressure of the refrigerant exiting the compressor 740 by regulating the amount of refrigerant bypassing the condenser 744. In some examples, the HPCV 742 enables the operation of the condenser 744 and the refrigeration system 704 when the ambient temperature of the gas turbine engine 102 is low. In some examples, the HPCV 742 is absent.

After exiting the condenser 744 and/or the HPCV 742, the saturated liquid refrigerant in the refrigerant flow line 736 enters the receiver 746. The receiver 746 (e.g., drier, etc.) is a filter and/or reservoir that removes moisture and prevents gas from flowing into the expansion valves 748A, 748B, 748C. In some examples, the receiver 746 is absent. After exiting the receiver 746, the flow of refrigerant is split between the refrigerant flow line 736 and the branch refrigerant flow lines 750A, 750B. The expansion valves 748A, 748B, 748C are similar to the expansion valve 310 of FIG. 3, except as noted otherwise. In the illustrated example of FIG. 7A, the flow of refrigerant in the refrigerant flow line 736 is expanded into the expansion valve 748A into a saturated vapor/liquid mixture and flows to the fuel cooling evaporator 727 to chill the fuel in the second fuel flow line 710 of FIG. 7A. In the illustrated example of FIG. 7A, the flow of refrigerant in the branch refrigerant flow lines 750A, 750B is expanded in the expansion valves 748B, 748C, respectively, into a saturated vapor/liquid mixture and used to chill the lubricant cooling evaporators 752A, 752B, respectively. Flow exiting the lubricant cooling evaporators 752A, 752B rejoins the second fuel flow line 710 upstream of the accumulator 738.

The lubrication system 706 lubricates and cools components of the gas turbine engine 102. In the illustrated example of FIG. 7A, the lubrication system 706 includes a lubricant flow line 753, the lubricant cooling evaporators 752A, 752B, a first heat-producing electronic component 754A, a second heat-producing electronic component 754B, a first mechanical heat-producing component 756A, a second mechanical heat-producing component 756B, a lubricant tank 758, a pump 760, the first lubricant cooler 723, and a second lubricant cooler 762. In the illustrated example of FIG. 7A, the lubrication system 706 is a dry sump. In other examples, the lubrication system 706 is a wet sump (e.g., the lubricant tank 758 is absent, etc.). The lubrication system 706 is similar to the lubrication system 604 of FIG. 6, except as noted otherwise. The lubricant flow line 753 is a flow circuit (e.g., the lubricant flow line 753 is a lubricant flow circuit, etc.) that cycles a lubricant therethrough (e.g., a synthetic oil, a natural oil, etc.). While one flow order of components of the lubrication system 706 is illustrated in FIG. 7A, in other examples, some or all of the components of the lubrication system 706 can be arranged in a different flow order(s) and/or omitted. For example, some or all of the heat-producing components 754A, 754B, 756A, 756B can be rearranged and/or omitted.

In the illustrated example of FIG. 7A, cooled lubricant exits the lubricant cooling evaporators 752A, 752B and sequentially cools the heat-producing electronic components 754A, 754B (e.g., via convection directly over the components, via convection through a structure coupled thereto, etc.). In some examples, the heat-producing electronic components 754A, 754B are motor generators associated with the spools of the gas turbine engine 102. In some examples, the heat-producing electronic components 754A, 754B have a higher operating temperature than heat-producing component(s) 731A, 731B, 731C and/or are capable of being cooler by the oil, which is at a higher temperature than the fuel in the second fuel flow line 710. In the illustrated example of FIG. 7A, the heat-producing electronic components 754A, 754B are disposed in parallel. In other examples, the heat-producing electronic components 754A, 754B, and/or other heat-producing electronic components of the gas turbine engine 102 are disposed in sequence.

After cooling the heat-producing electronic components 754A, 754B, lubricant in the lubricant flow line 753 cools and/or lubricates the mechanical heat-producing components 756A, 756B. In some examples, the mechanical heat-producing components 756A, 756B are the bearings associated with the spools of the gas turbine engine 102. Additionally or alternatively, the heat-producing mechanical components 756A, 756B are other heat-producing mechanical components (e.g., the accessory gear box 734, other gearboxes of the gas turbine engine 102, actuators of the gas turbine engine 102, etc.). In the illustrated example of FIG. 7A, the heat-producing mechanical components 756A, 756B are disposed in parallel. In other examples, the heat-producing mechanical components 756A, 756B, and/or other mechanical heat-producing component(s) of the gas turbine engine 102 are disposed in sequence.

After cooling the heat-producing components 754A, 754B, 756A, 756B, the heated lubricant flows along the lubricant flow line 753 flows to and is collected in the lubricant tank 758. Lubricant in the lubricant tank 758 and the lubricant flow line 753 is driven through the lubricant flow line 753 by the pump 760. After flowing through the pump 760, lubricant flows along the lubricant flow line 753 to the second lubricant cooler 762. In some examples, the second lubricant cooler 762 is an air-cooled oil cooler (ACOC) that transfers heat from the lubricant into the air flow of the gas turbine engine 102 (e.g., an air flow path of the gas turbine engine 102, etc.). For example, the second lubricant cooler 762 can transfer heat from the lubricant to a bypass flow of the gas turbine engine 102, a third stream of the gas turbine engine 102, and/or a bleed stream of the gas turbine engine 102. After being cooled, the lubricant flows along the lubricant flow line 753 to the first lubricant cooler 723. In some examples, the first lubricant cooler 723 is an FCOC that transfers heat from the lubricant into the fuel in the first fuel flow line 708. After the second lubricant cooler 762, the lubricant in the lubricant flow line 753 flows to the lubricant cooling evaporators 752A, 752B, which further cools the lubricant in the lubricant flow line 753. In some examples, some of the first lubricant cooler 723, the second lubricant cooler 762, and/or the lubricant cooling evaporators 752A, 752B are absent.

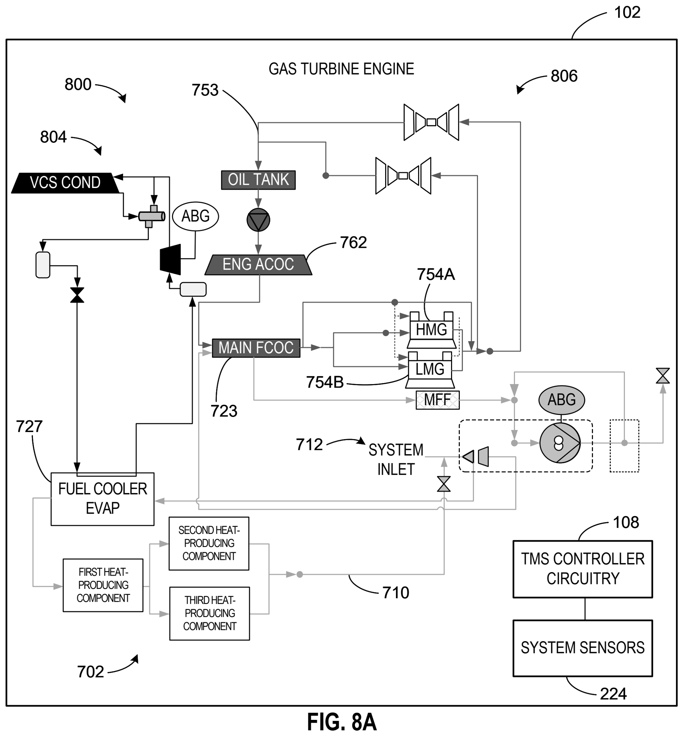

FIG. 7B is a schematic diagram of an example seventh fuel distribution and thermal management system 764 that can implement the fuel distribution and thermal management system 104 of FIG. 1. In the illustrated example of FIG. 7B, the seventh fuel distribution and thermal management system 764 is disposed in the gas turbine engine 102 of FIG. 1 and regulated by the TMS controller circuitry 108 of FIG. 1. In the illustrated example of FIG. 7B, the TMS controller circuitry 108 receives input(s) from the system sensors 224 of FIG. 2. In the illustrated example of FIG. 7B, the seventh fuel distribution and thermal management system 764 includes the engine fuel distribution system 702 of FIG. 7A, the refrigerant system 704 of FIG. 7A, and a lubrication system 766. The seventh fuel distribution and thermal management system 808 and the lubrication system 766 are similar to the sixth fuel distribution and thermal management system 800 of FIG. 8A and the lubrication system 706, respectively, except that the positions of the heat-producing electronic components 754A, 754B and the lubricant cooling evaporators 752A, 752B are reversed. That is, unlike the lubrication system 706 of FIG. 7A, lubricant flowing in the lubrication system 706 flows through the lubricant cooling evaporators 752A, 752B prior to flowing through the heat-producing electronic components 754A, 754B. In some such examples, the positioning of the heat-producing electronic components 754A, 754B and the lubricant cooling evaporators 752A, 752B in the seventh fuel distribution and thermal management system 764 enables comparatively greater cooling of the heat-producing mechanical components 756A, 756B than the sixth fuel distribution and thermal management system 700 of FIG. 7A.

FIG. 8A is a schematic diagram of an example eighth fuel distribution and thermal management system 800 that can implement the fuel distribution and thermal management system 104 of FIG. 1. In the illustrated example of FIG. 8A, the eighth fuel distribution and thermal management system 800 is disposed in the gas turbine engine 102 of FIG. 1 and regulated by the TMS controller circuitry 108 of FIG. 1. In the illustrated example of FIG. 8A, the TMS controller circuitry 108 receives input(s) from the system sensors 224 of FIG. 2.

In the illustrated example of FIG. 8A, the eighth fuel distribution and thermal management system 800 includes the engine fuel distribution system 702 of FIG. 7A, a refrigeration system 804, and a lubrication system 806. The refrigeration system 804 and the lubrication system 806 are similar to the refrigeration system 704 of FIG. 7A and the lubrication system 706 of FIG. 7A, except as noted otherwise. The eighth fuel distribution and thermal management system 800 is similar to the sixth fuel distribution and thermal management system 700 of FIG. 7A, except that the expansion valves 748A, 748B of FIG. 7A, the branch refrigerant flow lines 750A, 750B of FIG. 7A, and the lubricant cooling evaporators 752A, 752B are absent. That is, the refrigerant of the refrigeration system 804 is not used to cool the lubricant of the lubricant system 806 and cools the fuel in the second fuel flow line 710 of the engine fuel distribution system 702 in the fuel cooling evaporator 727. In the illustrated example of FIG. 8A, the lubricant of the lubrication system 806 is chilled by the first lubricant cooler 723. In the illustrated example of FIG. 8A, lubricant exiting the first lubricant cooler 723 directly flows through the lubricant flow line to cool the heat-producing electronic components 754A, 754B.

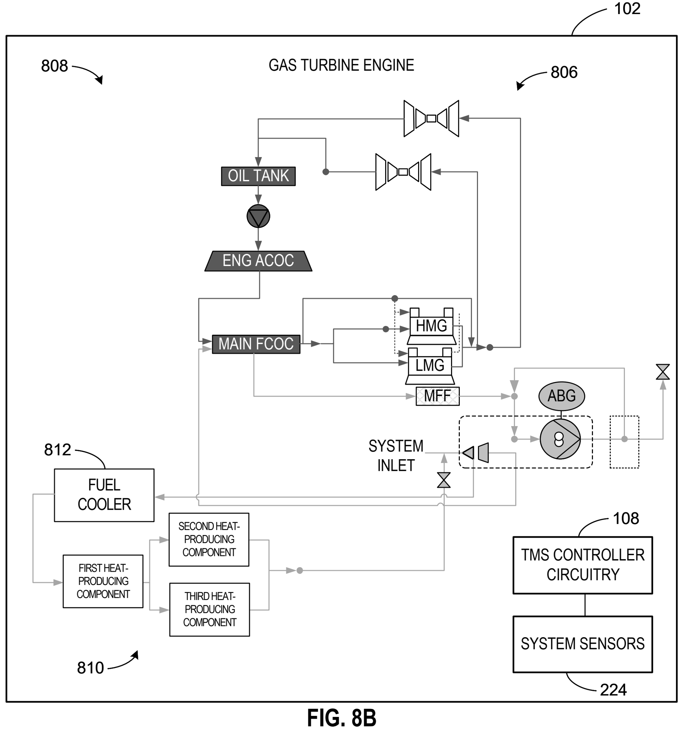

FIG. 8B is a schematic diagram of an example ninth fuel distribution and thermal management system 808 that can implement the fuel distribution and thermal management system of FIG. 1. In the illustrated example of FIG. 8B, the ninth fuel distribution and thermal management system 808 is disposed in the gas turbine engine 102 of FIG. 1 and regulated by the TMS controller circuitry 108 of FIG. 1. In the illustrated example of FIG. 8B, the TMS controller circuitry 108 receives input(s) from the system sensors 224 of FIG. 2. In the illustrated example of FIG. 8B, the ninth fuel distribution and thermal management system 808 includes an engine fuel distribution system 810 of FIG. 7A and the lubrication system 806 of FIG. 8A. The ninth fuel distribution and thermal management system 808 is similar to the eighth fuel distribution and thermal management system 800 of FIG. 8A, except that the refrigerant system 804 is absent. The engine fuel distribution system 810 is similar to the engine fuel distribution system 702 of FIGS. 7A-8B, except that the engine fuel distribution system 810 includes a fuel cooler 812 (e.g., instead of the fuel cooling evaporator 727 of FIGS. 7A-8B, etc.). In some examples, the fuel cooler 812 is an air-cooled fuel cooler (ACOC), which cools the fuel of the engine fuel distribution system 810 via an air flow associated with the gas turbine engine 102 (e.g., a bleed flow of the gas turbine engine 102, a third stream flow of the gas turbine engine, a bypass flow of the gas turbine engine 102, an ambient flow of air associated with the gas turbine engine 102, etc.).

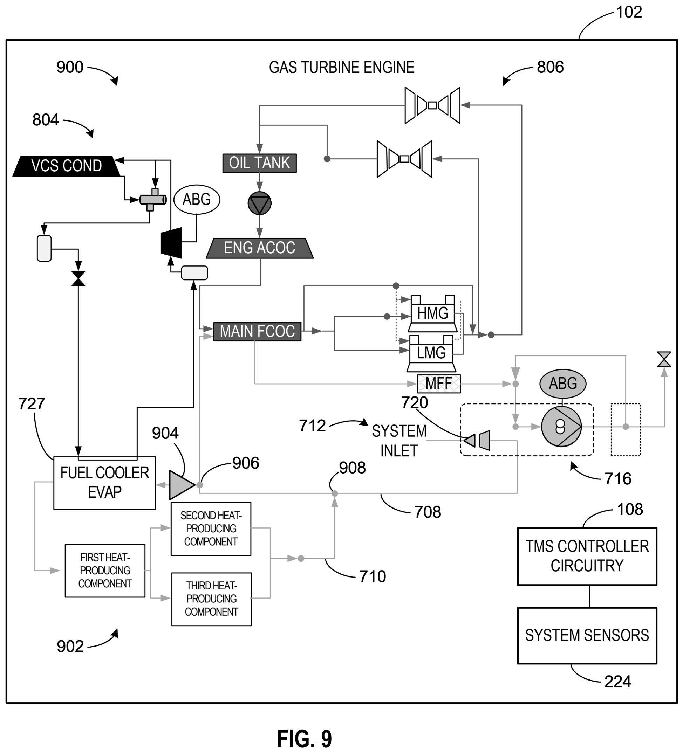

FIG. 9 is a schematic diagram of an example tenth fuel distribution and thermal management system 900 that can implement the fuel distribution and thermal management system 104 of FIG. 1. In the illustrated example of FIG. 9, the tenth fuel distribution and thermal management system 900 is disposed in the gas turbine engine 102 of FIG. 1 and regulated by the TMS controller circuitry 108 of FIG. 1. In the illustrated example of FIG. 9, the TMS controller circuitry 108 receives input(s) from the system sensors 224 of FIG. 2.

In the illustrated example of FIG. 9, the tenth fuel distribution and thermal management system 900 includes a fuel distribution system 902, the refrigeration system 804 of FIG. 8A, and the lubrication system 806 of FIG. 8A. In other examples, the tenth fuel distribution and thermal management system 900 includes the refrigeration system 704 of FIG. 7A and the lubrication system 706 of FIG. 7A (e.g., the tenth fuel distribution and thermal management system 900 includes the expansion valves 748A, 748B of FIG. 7A, the branch refrigerant flow lines 750A, 750B of FIG. 7A, and the lubricant cooling evaporators 752A, 752B, etc.). The tenth fuel distribution and thermal management system 900 is similar to the eighth fuel distribution and thermal management system 800 of FIG. 8A, except as noted otherwise.

The fuel distribution system 902 of FIG. 9 is similar to the engine fuel distribution system 702 of FIG. 7A, except as noted otherwise. In the illustrated example of FIG. 9, the fuel distribution system 902 includes the first fuel flow line 708 of FIG. 7A and the second fuel flow line 710 of FIG. 7A. In the illustrated example of FIG. 9, the second fuel flow line 710 includes a pump 904 that drives a flow therethrough. The pump 904 is a dedicated pump that recirculates fuel through the second fuel flow line 710. That is, flow through the second fuel flow line 710 is driven by both the main fuel pump system 716 and the pump 904. In some examples, the pump 904 is a fixed displacement pump. In other examples, the pump 904 is a variable displacement pump. In other examples, the pump 904 is a constant displacement pump. In the illustrated example of FIG. 9, the pump 904 is upstream of the fuel cooling evaporator 727. In the illustrated example of FIG. 9, the second fuel flow line is coupled to the first fuel flow line 708 at a first point 906 (e.g., a circuit inlet, an inlet, etc.) and a second point 908 (e.g., a circuit outlet, an outlet, etc.). Like the points 728, 730 of FIG. 7A, the second point 908 is upstream of the first point 906 along the first fuel flow line 708. In the illustrated example of FIG. 9, the positioning of the points 906, 908 causes a portion of the fuel flowing through the engine fuel distribution system 702 to be recirculated through the second fuel flow line 710. In the illustrated example of FIG. 9, unlike the points 728, 730, both of the points 906, 908 are downstream of the booster pump 720.

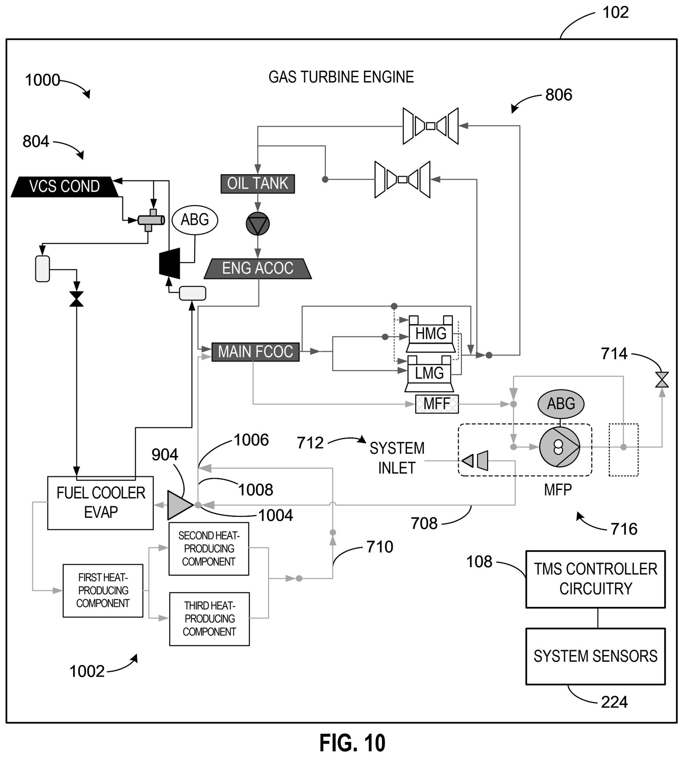

FIG. 10 is a schematic diagram of an example eleventh fuel distribution and thermal management system 1000 that can implement the fuel distribution and thermal management system 104 of FIG. 1. In the illustrated example of FIG. 10, the eleventh fuel distribution and thermal management system 1000 is disposed in the gas turbine engine 102 of FIG. 1 and regulated by the TMS controller circuitry 108 of FIG. 1. In the illustrated example of FIG. 10, the TMS controller circuitry 108 receives input(s) from the system sensors 224 of FIG. 2.

In the illustrated example of FIG. 10, the eleventh fuel distribution and thermal management system 1000 includes a fuel distribution system 1002, the refrigeration system 804 of FIG. 8A, and the lubrication system 806 of FIG. 8A. In other examples, the eleventh fuel distribution and thermal management system 1000 includes the refrigeration system 704 of FIG. 7A and the lubrication system 706 of FIG. 7A (e.g., the tenth fuel distribution and thermal management system 900 includes the expansion valves 748A, 748B of FIG. 7A, the branch refrigerant flow lines 750A, 750B of FIG. 7A, and the lubricant cooling evaporators 752A, 752B, etc.). The eleventh fuel distribution and thermal management system 1000 is similar to the eleventh fuel distribution and thermal management system 800 of FIG. 9, except as noted otherwise.

The fuel distribution system 1002 of FIG. 10 is similar to the fuel distribution system 902 of FIG. 9, except as noted otherwise. In the illustrated example of FIG. 10, the fuel distribution system 1002 includes the first fuel flow line 708 of FIG. 7A and the second fuel flow line 710 of FIG. 7A. In the illustrated example of FIG. 10, the second fuel flow line 710 is coupled to the first fuel flow line 708 at a first point 1004 (e.g., a circuit inlet, an inlet, etc.) and a second point 1006 (e.g., a circuit outlet, an outlet, etc.). In the illustrated example of FIG. 10, a portion 1008 of the first fuel flow line 708 is disposed between the points 1004, 1006. In the illustrated example of FIG. 10, unlike the points 728, 730, the second point 1006 (e.g., the outlet of the second fuel flow line 710, etc.) is downstream of the first point 1004 (e.g., the inlet of the second fuel flow line 710, etc.). That is, in the illustrated example of FIG. 10, the warm fuel flowing out of the second fuel flow line 710 is output downstream of the inlet (e.g., the first point 1004, etc.) of the second fuel flow line 710. In some examples, during certain operation conditions of the gas turbine engine 102, flow in the portion 1008 of the first fuel flow line 708 is reversed (e.g., the fuel away from the nozzle 714 to the engine fuel system inlet 712, which enables the recirculation of fuel within the second fuel flow line 710. In the illustrated example of FIG. 10, the fuel distribution system 1002 includes the pump 904. In other examples, the pump 904 is absent and fuel is driven through the second fuel flow line 710 via the main fuel pump system 716.

FIG. 11 is a block diagram of an example implementation of the TMS controller circuitry 108 of FIG. 1 to control the operation of the first VCS refrigeration system 302 of FIG. 3, the second VCS refrigeration system 502 of FIG. 5, the refrigeration system 602 of FIG. 6, the refrigeration system 704 of FIG. 7A, and the refrigeration system 804 of FIGS. 8A-10. In the illustrated example of FIG. 11, the TMS controller circuitry 108 includes sensor interface circuitry 1102, set point determiner circuitry 1104, temperature comparator circuitry 1106, threshold comparator circuitry 1108, and component interface circuitry 1110.

The TMS controller circuitry 108 of FIG. 11 may be instantiated (e.g., creating an instance of, bring into being for any length of time, materialize, implement, etc.) by programmable circuitry such as a Central Processor Unit (CPU) executing first instructions. Additionally or alternatively, the TMS controller circuitry 108 of FIG. 11 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 11 may, thus, be instantiated at the same or different times. Some or all of the circuitry of FIG. 11 may be instantiated, for example, in one or more threads executing concurrently on hardware and/or in series on hardware. Moreover, in some examples, some or all of the circuitry of FIG. 11 may be implemented by microprocessor circuitry executing instructions and/or FPGA circuitry performing operations to implement one or more virtual machines and/or containers.

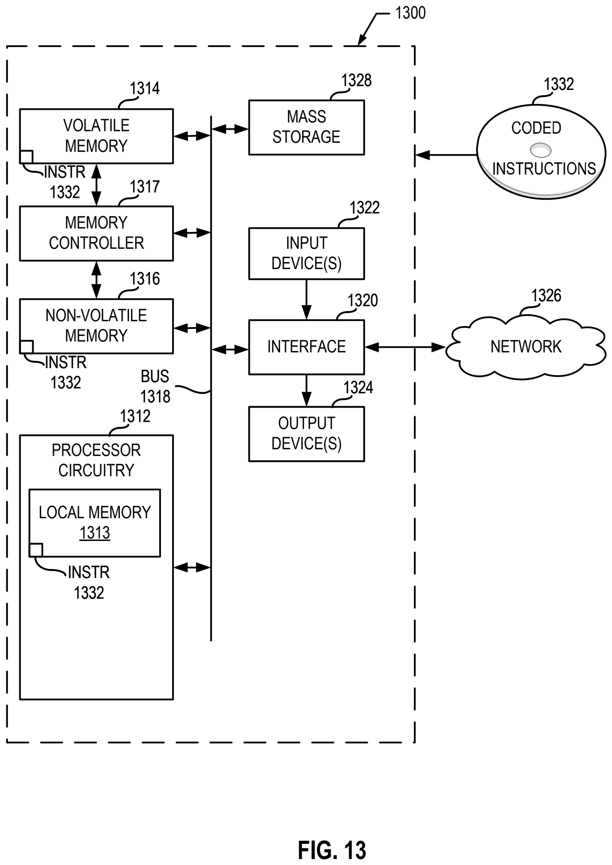

The sensor interface circuitry 1102 accesses (e.g., receives, retrieves, etc.) sensor data from the sensors associated with a fuel distribution system (e.g., the fuel distribution and thermal management systems 200, 300, 400, 500, 600, 700, 764, 800, 808, 900, 1000 of FIGS. 2-10, etc.). For example, the sensor interface circuitry 1102 can receive sensor outputs from system sensors 224 of FIGS. 2-10. In some examples, the sensor interface circuitry 1102 can transform the accessed sensor output from a machine-readable format to a human-readable format. In some examples, the sensor interface circuitry 1102 is instantiated by programmable circuitry executing sensor interface instructions and/or configured to perform operations such as those represented by the flowcharts of FIG. 13.

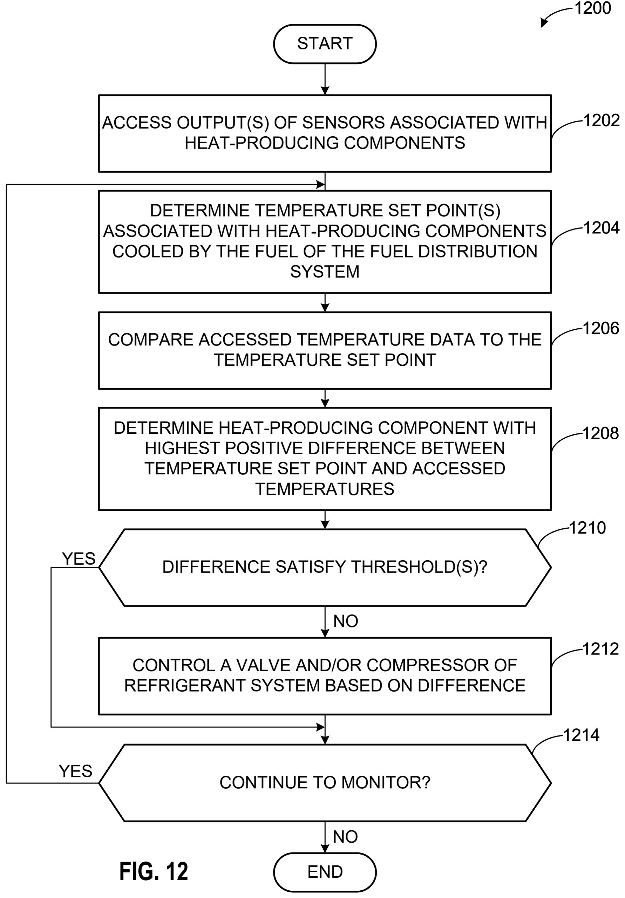

In some examples, the TMS controller circuitry 108 includes means for interfacing with a sensor. For example, the means for interfacing with a sensor may be implemented by the sensor interface circuitry 1102. In some examples, the sensor interface circuitry 1102 may be instantiated by programmable circuitry such as the example programmable circuitry 1312 of FIG. 13. For instance, the sensor interface circuitry 1102 may be instantiated a microprocessor executing machine executable instructions such as those implemented by at least blocks 1202 of FIG. 12. In some examples, the sensor interface circuitry 1102 may be instantiated by hardware logic circuitry, which may be implemented by an ASIC, XPU, or FPGA circuitry configured and/or structured to perform operations corresponding to the machine readable instructions. Additionally or alternatively, the sensor interface circuitry 1102 may be instantiated by any other combination of hardware, software, and/or firmware. For example, the sensor interface circuitry 1102 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The set point determiner circuitry 1104 determines the temperature set point of the heat-producing component(s) cooled by the fuel redistribution system (e.g., the heat-producing component(s) 216 of FIG. 2, the heat-producing component(s) 731A, 731B, 731C cooled by the engine fuel distribution system 702 of FIGS. 7A-10, etc.). In some examples, the set point determiner circuitry 1104 can determine the temperature set point of each of the heat-producing component(s). In other examples, the set point determiner circuitry 1104 determines the temperature of some of the heat-producing component(s) (e.g., the component expected to generate the most heat, etc.). In some examples, the set point determiner circuitry 1104 determines the temperature set point of the fuel temperature at the inlet of the heat-producing component(s) and/or the temperature of the fuel at the outlet of the heat-producing component(s).

In some examples, the set point determiner circuitry 1104 can determine the temperature set point based on an expected heat output(s) of the heat-producing component(s). In some examples, the set point determiner circuitry 1104 can be based on the flight information of the aircraft 100 (e.g., the altitude of the aircraft 100, the ambient temperature of the aircraft 100, the flight phase, angle of attack, etc.), operational parameters of the gas turbine engine 102 (e.g., engine speed, engine power, etc.), and/or the operational conditions of heat-producing component(s). For example, if the heat-producing component(s) 216 are a PDMU, the set point determiner circuitry 1104 can be based the power demand of the PDMU. In some examples, the set point determiner circuitry 1104 is converter, set point determiner circuitry 1104 can determine the temperature set points based on the speed, torque, or power demand of a generator or generators. In some examples, the set point determiner circuitry 1104 can determine the temperature set point(s) via a look-up table and/or a relationship curve.

In some examples, the TMS controller circuitry 108 includes means for determining a temperature set point of a heat-producing component. For example, the means for determining a temperature set point of a heat-producing component may be implemented by the set point determiner circuitry 1104. In some examples, the set point determiner circuitry 1104 may be instantiated by programmable circuitry such as the example programmable circuitry 1312 of FIG. 13. For instance, the set point determiner circuitry 1104 may be instantiated a microprocessor executing machine executable instructions such as those implemented by at least blocks 1204 of FIG. 12. In some examples, the set point determiner circuitry 1104 may be instantiated by hardware logic circuitry, which may be implemented by an ASIC, XPU, or FPGA circuitry configured and/or structured to perform operations corresponding to the machine readable instructions. Additionally or alternatively, the set point determiner circuitry 1104 may be instantiated by any other combination of hardware, software, and/or firmware. For example, the set point determiner circuitry 1104 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The temperature comparator circuitry 1106 compares the temperature(s) accessed by the sensor interface circuitry 1102 to the temperature set point(s) determined by the set point determiner circuitry 1104. For example, the temperature comparator circuitry 1106 can compare the temperature(s) of the fuel in the recirculation flow circuit (e.g., the second fuel flow line 204 of FIGS. 2-6, the second fuel flow line 710 of FIGS. 7A-10, etc.) at the heat-producing component(s) (e.g., the heat-producing component(s) 216 of FIG. 2, the heat-producing component(s) 731A, 731B, 731C cooled by the engine fuel distribution system 702 of FIGS. 7A-10, etc.) to the temperature set points to determine the difference(s) (e.g., the margin, etc.) therebetween. Additionally or alternatively, the temperature comparator circuitry 1106 can compare the current temperature of the heat-producing component(s) (e.g., the heat-producing component(s) 216 of FIG. 2, the heat-producing component(s) 731A, 731B, 731C cooled by the engine fuel distribution system 702 of FIGS. 7A-10, etc.) to the temperature set points to determine the difference(s) (e.g., the margin, etc.) therebetween. In some examples, the temperature comparator circuitry 1106 determines the heat-producing component of the considered heat-producing component(s)with the largest positive difference between the accessed temperature and the temperature set point (e.g., the heat-producing component that demands the greatest increase in provided cooling, the heat-producing component that is producing the greatest amount of undissipated heat etc.).

In some examples, the TMS controller circuitry 108 includes means for comparing a temperature to a temperature set point. For example, the means for comparing a temperature to a temperature set point may be implemented by the temperature comparator circuitry 1106. In some examples, the temperature comparator circuitry 1106 may be instantiated by programmable circuitry such as the example programmable circuitry 1312 of FIG. 13. For instance, the temperature comparator circuitry 1106 may be instantiated a microprocessor executing machine executable instructions such as those implemented by at least blocks 1208 of FIG. 12. In some examples, the temperature comparator circuitry 1106 may be instantiated by hardware logic circuitry, which may be implemented by an ASIC, XPU, or FPGA circuitry configured and/or structured to perform operations corresponding to the machine readable instructions. Additionally or alternatively, the temperature comparator circuitry 1106 may be instantiated by any other combination of hardware, software, and/or firmware. For example, the temperature comparator circuitry 1106 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The threshold comparator circuitry 1108 determines if the difference determined by temperature comparator circuitry 1106 satisfies a threshold. For example, the threshold comparator circuitry 1108 can compare if the difference is greater than or equal to a temperature margin threshold. In some examples, the threshold is 0 (e.g., the temperature set point is greater than or equal to the accessed temperature, etc.). In other examples, the threshold is a positive value (e.g., the temperature set point is greater than the accessed temperature by a threshold value, etc.).

In some examples, the TMS controller circuitry 108 includes means for comparing a difference to threshold. For example, the means for comparing a difference to threshold may be implemented by the threshold comparator circuitry 1108. In some examples, the threshold comparator circuitry 1108 may be instantiated by programmable circuitry such as the example programmable circuitry 1312 of FIG. 13. For instance, the threshold comparator circuitry 1108 may be instantiated a microprocessor executing machine executable instructions such as those implemented by at least blocks 1210 of FIG. 12. In some examples, the threshold comparator circuitry 1108 may be instantiated by hardware logic circuitry, which may be implemented by an ASIC, XPU, or FPGA circuitry configured and/or structured to perform operations corresponding to the machine readable instructions. Additionally or alternatively, the threshold comparator circuitry 1108 may be instantiated by any other combination of hardware, software, and/or firmware. For example, the threshold comparator circuitry 1108 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The component interface circuitry 1110 controls a valve and/or a compressor of the refrigeration system (e.g., the expansion valve 310 and compressor 306 of the first VCS refrigeration system 302 of FIG. 3, the expansion valves 504A, 504B and compressor 306 of the second VCS refrigeration system 502 of FIG. 5, the expansion valves 504A, 504B, 504C and the compressor 306 of the refrigeration system 602 of FIG. 6, the expansion valves 748A, 748B, 748C and the compressor 740 of the refrigeration system 704 of FIG. 7A, the expansion valve 748A and the compressor 740 of the refrigeration system 804 of FIGS. 8A-10, etc.). For example, if the expansion valve is a thermostatic valve (e.g., the valve is configured to maintain a set superheat of the refrigerant through an internal thermo-mechanical feedback mechanism, etc.), the component interface circuitry 1110 can increase the speed and/or compression ratio the compressor, which causes the valve to further open and increases the overall mass flow rate of refrigerant through the refrigerant flow line (e.g., the refrigerant flow line 304 of FIGS. 3, 5, and 6, the refrigerant flow line 736 of FIGS. 7A-10, etc.). For example, if the expansion valve is a controllable valve (e.g., the position of the valve can be actuated to a position by the component interface circuitry 1110, etc.), the component interface circuitry 1110 can control the position of the valve and/or the displacement of the compressor to adjust the superheat of the refrigerant exiting the gas turbine engine 102 and the temperature of the fluid exiting the evaporator.

In some examples, the TMS controller circuitry 108 includes means for interfacing with a component of a refrigeration system. For example, the means for interfacing with a component of a refrigeration system may be implemented by the component interface circuitry 1110. In some examples, the component interface circuitry 1110 may be instantiated by programmable circuitry such as the example programmable circuitry 1312 of FIG. 13. For instance, the threshold comparator circuitry 1108 may be instantiated a microprocessor executing machine executable instructions such as those implemented by at least blocks 1212, 1214 of FIG. 12. In some examples, the component interface circuitry 1110 may be instantiated by hardware logic circuitry, which may be implemented by an ASIC, XPU, or FPGA circuitry configured and/or structured to perform operations corresponding to the machine readable instructions. Additionally or alternatively, the component interface circuitry 1110 may be instantiated by any other combination of hardware, software, and/or firmware. For example, the component interface circuitry 1110 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the TMS controller circuitry 108 of FIG. 1 is illustrated in FIG. 11, one or more of the elements, processes, and/or devices illustrated in FIG. 5 may be combined, divided, re-arranged, omitted, eliminated, and/or implemented in any other way. Further, the sensor interface circuitry 1102, the set point determiner circuitry 1104, the temperature comparator circuitry 1106, the threshold comparator circuitry 1108, the component interface circuitry 1110, and/or, more generally, the TMS controller circuitry 108 of FIG. 11, may be implemented by hardware alone or by hardware in combination with software and/or firmware. Thus, for example, any of the sensor interface circuitry 1102, the set point determiner circuitry 1104, the temperature comparator circuitry 1106, the threshold comparator circuitry 1108, the component interface circuitry 1110, and/or, more generally, the TMS controller circuitry 108, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the TMS controller circuitry 108 of FIG. 11 may include one or more elements, processes, and/or devices in addition to, or instead of, those illustrated in FIG. 11, and/or may include more than one of any or all of the illustrated elements, processes and devices.

A flowchart representative of example machine readable instructions, which may be executed by programmable circuitry to implement and/or instantiate the TMS controller circuitry 108 of FIG. 11 and/or representative of example operations which may be performed by programmable circuitry to implement and/or instantiate the TMS controller circuitry 108 of FIG. 11, is shown in FIG. 12. The machine readable instructions may be one or more executable programs or portion(s) of one or more executable programs for execution by programmable circuitry such as the programmable circuitry 1312 shown in the example programmable circuitry platform 1300 discussed below in connection with FIG. 13 and/or may be one or more function(s) or portion(s) of functions to be performed by example programmable circuitry (e.g., an FPGA). In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart illustrated in FIG. 12, many other methods of implementing the TMS controller circuitry 108 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 12 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 12 is a flowchart representative of example machine readable instructions and/or example operations 1200 that may be executed, instantiated, and/or performed by programmable circuitry to control the operation of the first VCS refrigeration system 302 of FIG. 3, the second VCS refrigeration system 502 of FIG. 5, the refrigeration system 602 of FIG. 6, the refrigeration system 704 of FIG. 7A, and the refrigeration system 804 of FIGS. 8A-10. The example machine-readable instructions and/or the example operations 1200 of FIG. 12 begin at block 1202, at which sensor interface circuitry 1102 accesses (e.g., receives, retrieves, etc.) sensor data from the sensors associated with a fuel distribution system (e.g., the fuel distribution and thermal management systems 200, 300, 400, 500, 600, 700, 764, 800, 808, 900, 1000 of FIGS. 2-10, etc.). For example, the sensor interface circuitry 1102 can receive sensor outputs from system sensors 224 of FIGS. 2-10. In some examples, the sensor interface circuitry 1102 can transform the accessed sensor output from a machine-readable format (e.g., a voltage, a current, etc.) to a human-readable format (e.g., an integer, a floating-point number, etc.).

At block 1204, the set point determiner circuitry 1104 determines the temperature set point of the heat-producing component(s) cooled by the fuel redistribution system (e.g., the heat-producing component(s) 216 of FIG. 2, the heat-producing component(s) 731A, 731B, 731C cooled by the engine fuel distribution system 702 of FIGS. 7A-10, etc.). In some examples, the set point determiner circuitry 1104 determines the temperature set point of the fuel temperature at the inlet of the heat-producing component(s) and/or the temperature of the fuel at the outlet of the heat-producing component(s).

In some examples, the set point determiner circuitry 1104 can determine the temperature set point of each of the heat-producing component(s). In other examples, the set point determiner circuitry 1104 determines the temperature of some of the heat-producing component(s) (e.g., the component expected to generate the most heat, etc.). In some examples, the set point determiner circuitry 1104 can determine the temperature set point based on an expected heat output(s) of the heat-producing component(s). In some examples, the set point determiner circuitry 1104 can be based on the flight information of the aircraft 100 (e.g., the altitude of the aircraft 100, the ambient temperature of the aircraft 100, the flight phase, angle of attack, etc.), operational parameters of the gas turbine engine 102 (e.g., engine speed, engine power, etc.), and/or the operational conditions of heat-producing component(s). For example, if the heat-producing component(s) 216 are a PDMU, the set point determiner circuitry 1104 can be based the power demand of the PDMU. In some examples, the set point determiner circuitry 1104 is converter, set point determiner circuitry 1104 can determine the temperature set points based on the speed of the converter. In some examples, the set point determiner circuitry 1104 can determine the temperature set point(s) via a look-up table and/or a relationship curve.

At block 1206, the temperature comparator circuitry 1106 compares the temperature data accessed during the execution of block 1202 to the temperature set point determined during the execution of block 1204. For example, the temperature comparator circuitry 1106 can compare the temperature(s) of the fuel in the recirculation flow circuit (e.g., the second fuel flow line 204 of FIGS. 2-6, the second fuel flow line 710 of FIGS. 7A-10, etc.) at the heat-producing component(s) (e.g., the heat-producing component(s) 216 of FIG. 2, the heat-producing component(s) 731A, 731B, 731C cooled by the engine fuel distribution system 702 of FIGS. 7A-10, etc.) to the temperature set points to determine the difference(s) (e.g., the margin, etc.) therebetween. Additionally or alternatively, the temperature comparator circuitry 1106 can compare the current temperature of the heat-producing component(s) (e.g., the heat-producing component(s) 216 of FIG. 2, the heat-producing component(s) 731A, 731B, 731C cooled by the engine fuel distribution system 702 of FIGS. 7A-10, etc.) to the temperature set points to determine the difference(s) (e.g., the margin, etc.) therebetween.

At block 1208, the temperature comparator circuitry 1106 determines the heat-producing component of the considered heat-producing component(s) with the lowest difference between the accessed temperature and the temperature set point. For example, the temperature comparator circuitry 1106 can determine the heat-producing component of the heat-producing component(s) (e.g., e.g., the heat-producing component(s) 216 of FIG. 2, the heat-producing component(s) 731A, 731B, 731C cooled by the engine fuel distribution system 702 of FIGS. 7A-10, etc.) that has the greatest positive (e.g., smallest value, etc.) difference between the accessed temperature and the temperature set point of the heat-producing component. That is, the temperature comparator circuitry 1106 identifies the heat-producing component where the difference accessed temperature and the temperature set point of the heat-producing component has the largest positive value that indicates the heat-producing component generates the most heat (e.g., benefits from cooling the most, etc.).

At block 1210, the threshold comparator circuitry 1108 determines if the difference determined during the execution of block 1208 satisfies a threshold. For example, the threshold comparator circuitry 1108 can compare if the difference is greater than or equal to a temperature margin threshold. In some examples, the threshold is 0 (e.g., the temperature set point is greater than or equal to the accessed temperature, etc.). In other examples, the threshold is a positive value (e.g., the temperature set point is greater than the accessed temperature by a threshold value, etc.). If the threshold comparator circuitry 1108 determines the difference satisfies the threshold, the operations 1200 advance to block 1214. If the threshold comparator circuitry 1108 determines the difference does not satisfy the threshold, the operations 1200 advance to block 1212.

At block 1212, the component interface circuitry 1110 controls a valve and/or a compressor of the refrigeration system (e.g., the expansion valve 310 and compressor 306 of the first VCS refrigeration system 302 of FIG. 3, the expansion valves 504A, 504B and compressor 306 of the second VCS refrigeration system 502 of FIG. 5, the expansion valves 504A, 504B, 504C and the compressor 306 of the refrigeration system 602 of FIG. 6, the expansion valves 748A, 748B, 748C and the compressor 740 of the refrigeration system 704 of FIG. 7A, the expansion valve 748A and the compressor 740 of the refrigeration system 804 of FIGS. 8A-10, etc.). For example, if the expansion valve is a thermostatic valve (e.g., the valve is configured to maintain a set superheat of the refrigerant, etc.), the component interface circuitry 1110 can increase the speed and/or compression ratio the compressor, which causes the valve to further open and increases the overall mass flow rate of refrigerant through the refrigerant flow line (e.g., the refrigerant flow line 304 of FIGS. 3, 5, and 6, the refrigerant flow line 736 of FIGS. 7A-10, etc.). For example, if the expansion valve is a controllable valve (e.g., the position of the valve can be actuated to a position by the component interface circuitry 1110, etc.), the component interface circuitry 1110 can control the position of the valve and/or the speed of the compressor to adjust the fuel temperature exiting the evaporator.

At block 1214, the component interface circuitry 1110 determines if the monitoring of the fuel distribution system is to continue. For example, the component interface circuitry 1110 can determine to continue monitoring a fuel distribution system (e.g., the first fuel distribution and thermal management systems 200, 300, 400, 500, 600, 700, 764, 800, 808, 900, 1000, etc.) based on the operation of such fuel distribution system (e.g., continue monitoring if the fuel distribution system is still operating, etc.). Additionally or alternatively, the component interface circuitry 1110 can determine whether to continue monitoring or cease monitoring based on a user input from an operator of the fuel distribution system and/or aircraft 100. If the component interface circuitry 1110 determines monitoring of the fuel distribution and thermal management system is to continue, the operations 1200 return to block 1204. If the component interface circuitry 1110 determines to not continue monitoring the fuel distribution and thermal management system (e.g., to cease monitoring the fuel distribution and thermal management system, etc.), the operations 1200 end.

FIG. 13 is a block diagram of an example programmable circuitry platform 1300 structured to execute and/or instantiate the example machine-readable instructions and/or the example operations of FIG. 12 to implement the TMS controller circuitry 108 of FIG. 11. The programmable circuitry platform 1300 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a headset (e.g., an augmented reality (AR) headset, a virtual reality (VR) headset, etc.) or other wearable device, or any other type of computing and/or electronic device.

The programmable circuitry platform 1300 of the illustrated example includes programmable circuitry 1312. The programmable circuitry 1312 of the illustrated example is hardware. For example, the programmable circuitry 1312 can be implemented by one or more integrated circuits, logic circuits, FPGAs, microprocessors, CPUs, GPUs, DSPs, and/or microcontrollers from any desired family or manufacturer. The programmable circuitry 1312 may be implemented by one or more semiconductor based (e.g., silicon based) devices. In this example, the programmable circuitry 1312 implements the sensor interface circuitry 1102, the set point determiner circuitry 1104, the temperature comparator circuitry 1106, the threshold comparator circuitry 1108, and the component interface circuitry 1110.

The programmable circuitry 1312 of the illustrated example includes a local memory 1313 (e.g., a cache, registers, etc.). The programmable circuitry 1312 of the illustrated example is in communication with main memory 1314, 1316, which includes a volatile memory 1314 and a non-volatile memory 1316, by a bus 1318. The volatile memory 1314 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1316 may be implemented by flash memory and/or any other desired type of memory device. Access to the main memory 1314, 1316 of the illustrated example is controlled by a memory controller 1317. In some examples, the memory controller 1317 may be implemented by one or more integrated circuits, logic circuits, microcontrollers from any desired family or manufacturer, or any other type of circuitry to manage the flow of data going to and from the main memory 1314, 1316.

The programmable circuitry platform 1300 of the illustrated example also includes interface circuitry 1320. The interface circuitry 1320 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1322 are connected to the interface circuitry 1320. The input device(s) 1322 permit(s) a user (e.g., a human user, a machine user, etc.) to enter data and/or commands into the programmable circuitry 1312. The input device(s) 1322 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1324 are also connected to the interface circuitry 1320 of the illustrated example. The output device(s) 1324 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1320 of the illustrated example, thus, typically includes a graphics driver card, a graphics driver chip, and/or graphics processor circuitry such as a GPU.

The interface circuitry 1320 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1326. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1300 of the illustrated example also includes one or more mass storage discs or devices 1328 to store firmware, software, and/or data. Examples of such mass storage discs or devices 1328 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1332, which may be implemented by the machine readable instructions of FIG. 13, may be stored in the mass storage device 1328, in the volatile memory 1314, in the non-volatile memory 1316, and/or on at least one non-transitory computer readable storage medium such as a CD or DVD which may be removable.

Gas turbine engines including thermal management systems with recirculating fuel circuits and related methods are disclosed herein. Example fuel distribution and thermal management systems disclosed herein include fuel flow recirculation circuits that are coupled to fuel coolers that exchange heat between the fuel in the fuel flow and a refrigerant of a refrigeration system. Examples disclosed herein enable the component of low temperature electronics. Examples disclosed herein facilitate the cooling of components in gas turbine engines with comparatively low fuel flow rates (e.g., comparatively high fuel efficiency, etc.) and gas turbine engines with comparatively large heat loads from electronic components. Examples fuel distribution and thermal management systems enhance the cooling provided per unit of fuel, which decreases the volume and weight of such systems in comparison to prior fuel distribution and thermal management systems. Accordingly, examples disclosed herein enable the reduction of size of fuel distribution and thermal management systems, which reduces the weight of the aircraft.

Further aspects are provided by the subject matter of the following clauses:
A gas turbine engine comprising a fuel flow line including a fuel inlet, a combustor fluidly coupled to the fuel flow line, and a recirculation flow circuit coupled to the fuel flow line between the fuel inlet and the combustor, the recirculation flow circuit including a cooler and a heat-producing component downstream of the cooler.

The gas turbine engine of any preceding clause, further including a first fuel pump fluidly coupled to the fuel flow line and wherein the recirculation flow circuit is coupled to the fuel flow line at a first point, and a second point upstream of the first point along the fuel flow line, the second point upstream of the first fuel pump along the fuel flow line.

The gas turbine engine of any preceding clause, wherein the first point is a port associated with the first fuel pump.

The gas turbine engine of any preceding clause, wherein the recirculation flow circuit further includes a second fuel pump.

The gas turbine engine of any preceding clause, wherein the second fuel pump is upstream of the cooler along the recirculation flow circuit.

The gas turbine engine of any preceding clause, wherein the heat-producing component includes at least one of a power distribution management unit or an inverter converter controller.

The gas turbine engine of any preceding clause, further including a refrigerant flow circuit fluidly coupled to the cooler, the refrigerant flow circuit including a compressor, a condenser downstream of the compressor, and an expansion valve downstream of the compressor upstream of the cooler.

The gas turbine engine of any preceding clause, wherein the cooler is a first cooler, further including a lubricant flow circuit including a second cooler fluidly coupled to an air flow path of the gas turbine engine, a third cooler downstream of the second cooler, the third cooler coupled to the fuel flow line, an evaporator downstream of the second cooler, the evaporator fluidly coupled to the refrigerant flow circuit, a second heat-producing component downstream of the evaporator, and a third heat-producing component downstream of the second heat-producing component.

The gas turbine engine of any preceding clause, wherein the second heat-producing component is a motor generator coupled to a spool of the gas turbine engine and the third heat-producing component is a bearing of the gas turbine engine.

The gas turbine engine of any preceding clause, wherein the evaporator is a first evaporator and the lubricant flow circuit further includes a second evaporator downstream of the second cooler, the evaporator fluidly coupled to the refrigerant flow circuit in parallel with the first evaporator, and a fourth heat-producing component downstream of the second evaporator.

An apparatus comprising a first flow line to extend between a fuel inlet and a combustor of a gas turbine engine, the first flow line including a first fuel pump, a second flow line including an inlet coupled to the first flow line, and an outlet coupled to the first flow line, a fuel cooler coupled to the second flow line between the inlet and outlet, and a heat-producing electronic component thermally coupled to the second flow line downstream of the fuel cooler.

The apparatus of any preceding clause, wherein the outlet is upstream of the first fuel pump and the inlet.

The apparatus of any preceding clause, further including a second pump coupled to the second flow line.

The apparatus of any preceding clause, wherein the inlet and the outlet are downstream of the first fuel pump and the inlet is upstream of the outlet.

The apparatus of any preceding clause, wherein the outlet is downstream of the inlet.

The apparatus of any preceding clause, wherein the heat-producing electronic component includes at least one of a power distribution management unit or an inverter converter controller.

The apparatus of any preceding clause, further including a third flow line coupled to the fuel cooler.

The apparatus of any preceding clause, further including a vapor cycle system coupled to the third flow line and wherein the fuel cooler is to evaporate a refrigerant in the third flow line.

The apparatus of any preceding clause, further including an air cycle system thermally coupled to third flow line via a buffer thermal transport fluid.

The apparatus of any preceding clause, further including a cooler downstream of the inlet and the outlet, the cooler configured to exchange heat between a fuel in the first flow line and a lubricant of the gas turbine engine.

A method comprising determining a first difference between a first temperature set point of a first component and a first temperature of a fuel cooling the first component, determining a second difference between a second temperature set point of a second component and a second temperature of the fuel cooling the second component, comparing a greater one of the first difference and the second difference to a threshold, and controlling at least one of a valve or a condenser of vapor cycle system based on the comparison of the greater one and threshold, the vapor cycle system including a cooler thermally coupled to the fuel.

A non-transitory computer readable medium comprising instructions, which when executed cause a processor to determine a first difference between a first temperature set point of a first component and a first temperature of a fuel cooling the first component, determine a second difference between a second temperature set point of a second component and a second temperature of the fuel cooling the second component, compare a greater one of the first difference and the second difference to a threshold, and control at least one of a valve or a condenser of vapor cycle system based on the comparison of the greater one and threshold, the vapor cycle system including a cooler thermally coupled to the fuel.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An apparatus (200, 300, 400, 500, 600, 700, 764, 800, 808, 900, 1000) for a gas turbine engine, the apparatus (200, 300, 400, 500, 600, 700, 764, 800, 808, 900, 1000) comprising:
a fuel flow line (202, 708) including a fuel inlet (209, 712); and a nozzle (212, 714) fluidly coupled to the fuel flow line (202, 708);
a recirculation flow circuit (204, 710) coupled to the fuel flow line (202, 708) between the fuel inlet (209, 712) and the nozzle (212, 714), the recirculation flow circuit (204, 710) including:
a first cooler (215, 301, 401, 727, 812); and
a first heat-producing component (216, 731A) downstream of the first cooler (215, 301, 401, 727, 812).

2. The apparatus (200, 300, 400, 500, 600, 700, 764, 800, 808, 900) of claim 1, further including a first fuel pump (214, 720) fluidly coupled to the fuel flow line (202, 708) and wherein the recirculation flow circuit (204, 710) is coupled to the fuel flow line (202, 708) at:
a first point (206, 728); and
a second point (208, 730) upstream of the first point (206, 728) along the fuel flow line (202, 708).

3. The apparatus (700, 764, 800, 808, 900, 1000) of claim 2, wherein the first point (728) is a port associated with the first fuel pump (720).

4. The apparatus (200, 300, 400, 500, 600, 700, 764, 800, 808, 900, 1000) of claim 2 or 3, wherein the second point (208, 730) is upstream of the first fuel pump (214, 720) along the fuel flow line (202, 708).

5. The apparatus (900) of any of claims 2 to 4, wherein the first point (728) and the second point (730) are downstream of the first fuel pump (720).

6. The apparatus (900, 1000) of any preceding claim, wherein the recirculation flow circuit (710) further includes a second fuel pump (904).

7. The apparatus (900, 1000) of claim 6, wherein the second fuel pump (904) is upstream of the first cooler (727) along the recirculation flow circuit (710).

8. The apparatus (200, 300, 400, 500, 600, 700, 764, 800, 808, 900, 1000) of any preceding claim, wherein the first heat-producing component (216, 731A) includes at least one of a power distribution management unit or an inverter converter controller.

9. The apparatus (400) of any preceding claim, further including an air cycle system (402) thermally coupled to the first cooler (401).

10. The apparatus (300, 500, 600, 700, 764, 800, 900, 1000) of any preceding claim, further including a refrigerant flow circuit (304, 736) fluidly coupled to the first cooler (215, 301, 401, 727, 812), the refrigerant flow circuit (304, 736) including:
a compressor (306, 740);
a condenser downstream of the compressor (306, 740); and
an expansion valve (310, 504A, 748A) downstream of the compressor (306, 740) upstream of the first cooler (301, 727).

11. The apparatus (500, 600, 700, 764, 800, 900, 1000) of claim 10, further including a lubricant flow circuit (510, 753) including:
a second cooler (508, 762) fluidly coupled to an air flow path of the gas turbine engine (106);
a first evaporator (507, 752A) downstream of the second cooler (762), the first evaporator (507, 752A) fluidly coupled to the refrigerant flow circuit (510, 736);
a second heat-producing component (514, 754A) downstream of the first evaporator (507, 752A); and
a third heat-producing component (516, 756A) downstream of the first heat-producing component (514, 754A).

12. The apparatus (700, 764, 800, 900, 1000) of claim 11, wherein the lubricant flow circuit (753) further includes a third cooler (762) downstream of the second cooler (762), the third cooler (762) coupled to the fuel flow line (202, 708).

13. The apparatus (700, 764, 800, 808, 900, 1000) of claim 11 or 12, wherein the second heat-producing component (752A) is a first motor generator coupled to a spool of the gas turbine engine and the third heat-producing component (756A) is a bearing of the gas turbine engine.

14. The apparatus (600, 700) of any of claims 11 to 13, wherein the lubricant flow circuit (510, 753) further includes:
a second evaporator (606, 752B) downstream of the second cooler (508, 762), the second evaporator (606, 752B) fluidly coupled to the refrigerant flow circuit (510, 736) in parallel with the first evaporator (508, 752A); and
a fourth heat-producing component (608, 754B) downstream of the second evaporator (606, 752B).

15. A gas turbine engine including the apparatus (200, 300, 400, 500, 600, 700, 764, 800, 808, 900, 1000) of any one of claims 1-14.
